(19) Europäisches Patentamt
European Patent Office
Office européen des brevets

(11) EP 4 495 167 B1

(12) **EUROPEAN PATENT SPECIFICATION**

(45) Date of publication and mention of the grant of the patent:
**27.05.2026 Bulletin 2026/22**

(21) Application number: **23770131.3**

(22) Date of filing: **27.01.2023**

(51) International Patent Classification (IPC):
***G02F 1/1516*** *(2019.01)* ***C09K 9/02*** *(2006.01)*

(52) Cooperative Patent Classification (CPC):
**G02F 1/1516; C09K 9/02;** C09K 2211/187

(86) International application number:
**PCT/JP2023/002706**

(87) International publication number:
**WO 2023/176169 (21.09.2023 Gazette 2023/38)**

(54) **METALLO-SUPRAMOLECULAR POLYMER, ELECTROCHROMIC DEVICE, AND METHOD FOR PRODUCING METALLO-SUPRAMOLECULAR POLYMER**

METALLSUPRAMOLEKULARES POLYMER, ELEKTROCHROME VORRICHTUNG UND VERFAHREN ZUR HERSTELLUNG EINES METALLSUPRAMOLEKULAREN POLYMERS

POLYMÈRE MÉTALLO-SUPRAMOLÉCULAIRE, DISPOSITIF ÉLECTROCHROMIQUE ET PROCÉDÉ DE PRODUCTION DE POLYMÈRE MÉTALLO-SUPRAMOLÉCULAIRE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **14.03.2022 JP 2022039310**

(43) Date of publication of application:
**22.01.2025 Bulletin 2025/04**

(73) Proprietors:
- **National Institute for Materials Science Tsukuba-shi, Ibaraki 305-0047 (JP)**
- **National Institute of Advanced Industrial Science and Technology Chiyoda-ku Tokyo 100-8921 (JP)**

(72) Inventors:
- **HIGUCHI Masayoshi Tsukuba-shi, Ibaraki 305-0047 (JP)**
- **SANTRA Dines Chandra Tsukuba-shi, Ibaraki 305-0047 (JP)**
- **NAGAHATA Ritsuko Tsukuba-shi, Ibaraki 305-8560 (JP)**

(74) Representative: **J A Kemp LLP 80 Turnmill Street London EC1M 5QU (GB)**

(56) References cited:
**JP-A- 2018 145 244**

- **CHIH-WEI HU ET AL: "Three-Dimensional Fe(II)-based Metallo-Supramolecular Polymers with Electrochromic Properties of Quick Switching, Large Contrast, and High Coloration Efficiency", ACS APPLIED MATERIALS & INTERFACES, vol. 6, no. 12, 3 June 2014 (2014-06-03), United States, pages 9118 - 9125, XP055705704, ISSN: 1944-8244, DOI: 10.1021/am5010859**
- **HU, CHIH-WEI ET AL.: "Three-Dimensional Fe(II)-based Metallo-Supramolecular Polymers with Electrochromic Properties of Quick Switching, Large Contrast, and High Coloration Efficiency", APPLIED MATERIALS & INTERFACES, vol. 6, 2014, pages 9118 - 9125, XP055705704, DOI: 10.1021/am5010859**
- **CONSTABLE EDWIN C., M.W. CARGILL THOMPSON: "Multinucleating 2,2':6',2"-Terpyridine Ligands as Building Blocks for the Assembly of Co-ordination Polymers and Oligomers", JOURNAL OF THE CHEMICAL SOCIETY. DALTON TRANSACTIONS, no. 24, 1 January 1992 (1992-01-01), pages 3467 - 3475, XP093092952, DOI: 10.1039/DT9920003467**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 495 167 B1

## Description

### Technical Field

The present invention relates to a metallo-supramolecular polymer, an electrochromic device, and a method for manufacturing a metallo-supramolecular polymer.

### Background Art

A metallo-supramolecular polymer is a coordination polymer obtained by complexation of a metal ion and an organic ligand and is colored by electronic charge transfer absorption of a metal complex part. The present inventors have revealed that metallo-supramolecular polymers exhibit reversible electrochromic properties by electrochemical redox of metal ions (for example, Patent Literature 1).

A tungsten oxide film is known as a typical material that exhibits electrochromic properties, but is required to be formed in vacuum by sputtering or the like. In contrast, a metallo-supramolecular polymer can be formed into a film by coating on an electrode substrate under atmospheric condition. Accordingly, the base material is not required to have heat resistance, and a PET (polyethylene terephthalate) film or the like can also be used. Accordingly, a flexible electrochromic dimming film device can also be produced by using a metallo-supramolecular polymer.

The performance of an electrochromic material is evaluated by transmittance in the bleached state, transmittance in the colored state, transmittance difference, response speed of color switching, amount of charge consumed, coloration efficiency, and so on. In particular, coloration efficiency ($\eta$: $cm^2/C$) is a value obtained by dividing the optical density difference ($\Delta OD$) between the colored and bleached states by the amount of charge consumed and directly represents the performance of a material. The present inventors have revealed that a metallo-supramolecular polymer consisting of iron ions and bis(terpyridyl)benzene has a high coloration efficiency of 264 $cm^2/C$ and that the coloration efficiency is further improved up to 383 $cm^2/C$ by adding tris(terpyridylphenyl)benzene in an amount of 15 mol% based on the total amount of the ligand (Non Patent Literature 1).

Furthermore, the present inventors have reported in Non Patent Literature 2 that the coloration efficiency of a metallo-supramolecular polymer using a ligand having a terpyridine structure and a phenanthroline structure in one molecule is improved up to 689 $cm^2/C$.

### Citation List

#### Patent Literature

Patent Literature 1: Japanese Unexamined Patent Application Publication No. 2007-112957

#### Non Patent Literature

Non Patent Literature 1: ACS Appl. Mater. Interfaces, 6, 9118-9125 (2014)
Non Patent Literature 2: ACS Appl. Electron. Mater., 3(5), 2044-2055 (2021)

### Summary of Invention

#### Technical Problem

The metallo-supramolecular polymer reported in Non Patent Literature 1 exhibited a high coloration efficiency. However, in order to spread dimming glass devices, it is required to create a material that exhibits a further higher coloration efficiency.

The metallo-supramolecular polymer reported in Non Patent Literature 2 exhibited a coloration efficiency higher than the polymer reported in Non Patent Literature 1. However, the ligand used in Non Patent Literature 2 has coordination sites of different chemical structures (terpyridine structure and phenanthroline structure) in one molecule. Hereinafter, a ligand in such a structure is appropriately referred to as "asymmetric ligand", and a ligand in which all the coordination sites to a metal contained in one molecule have the same chemical structure is appropriately referred to as "symmetric ligand".

In the asymmetric ligand, two electronic charge transfer absorptions occur based on two types of complexation. Since the maximum absorption wavelengths of the two absorptions are close and overlap each other, it is difficult to simply compare the coloration efficiencies when an asymmetric organic ligand is used and when a symmetric organic ligand is

used. Furthermore, the metallo-supramolecular polymer having an asymmetric organic ligand is inferior to the metallo-supramolecular polymer having a symmetric organic ligand in the color purity.

The present invention solves the above problems and provides a metallo-supramolecular polymer using a symmetric (organic) ligand and having a higher coloration efficiency.

The present invention also provides an electrochromic device including the metallo-supramolecular polymer and a method for manufacturing a metallo-supramolecular polymer.

Solution to Problem

The present inventors have made extensive studies to achieve the above-mentioned object and as a result, found that the above object can be achieved by the following configurations.

[1] A metallo-supramolecular polymer formed by alternately linking metal cations and organic ligands through coordinate bonds, wherein the organic ligands include a tris(terpyridine) compound represented by a formula (B) below and a bis(terpyridine) compound represented by a formula (L) below;
[2] The metallo-supramolecular polymer according to [1], wherein in the formula (B), T represents one selected from the group consisting of a trivalent aryl group obtained by removing 3 hydrogen atoms from benzene, a trivalent heterocyclic group obtained by removing 3 hydrogen atoms from a 6-membered heterocyclic compound, and a methine group;
[3] The metallo-supramolecular polymer according to [1] or [2], wherein in the formula (B), T is a group represented by a formula (I) below;
[4] The metallo-supramolecular polymer according to any one of [1] to [3], wherein the tris(terpyridine) compound represented by the formula (B) is a compound represented by a formula (B-1) below;
[5] The metallo-supramolecular polymer according to any one of [1] to [4], having a trifunctional branch point represented by a formula (II) below;
[6] The metallo-supramolecular polymer according to any one of [1] to [5], wherein the bis(terpyridine) compound represented by the formula (L) includes a compound represented by a formula (L-1) below;
[7] The metallo-supramolecular polymer according to any one of [1] to [6], wherein the metal cation is a cation of at least one metal selected from the group consisting of iron (Fe), cobalt (Co), ruthenium (Ru), and osmium (Os);
[8] An electrochromic device comprising the metallo-supramolecular polymer according to any one of [1] to [7];
[9] A method for manufacturing a metallo-supramolecular polymer formed by alternately linking metal cations and organic ligands through coordinate bonds, the manufacturing method of a metallo-supramolecular polymer comprising applying energy to a first mixture liquid containing a metal salt consisting of metal cations and counter ions, and bis(terpyridine) compounds represented by the formula (L) below to obtain a linear metallo-supramolecular polymer precursor formed by alternately linking the bis(terpyridine) compounds and the metal cations through coordinate bonds, and applying energy to a second mixture liquid containing the metal salt, the metallo-supramolecular polymer precursor, and tris(terpyridine) compounds represented by the formula (B) below to obtain a metallo-supramolecular polymer having a branched structure derived from the tris(terpyridine) compound;
[10] The method for manufacturing a metallo-supramolecular polymer according to [9], wherein the branched structure has a trifunctional branch point represented by the formula (II) below; and
[11] The method for manufacturing a metallo-supramolecular polymer according to [9] or [10], wherein a molar content ratio of the total content of the coordination sites possessed by the bis(terpyridine) compounds and the tris(terpyridine) compounds to the total content of the metal cations contained in the first mixture liquid and the second mixture liquid is 1.0 to 3.0.

Advantageous Effects of Invention

The metallo-supramolecular polymer of the present invention includes a symmetric ligand and exhibits a high coloration efficiency.

Brief Description of Drawings

[Fig. 1A] Fig. 1A is a diagram explaining an electrochromic device of an embodiment.
[Fig. 1B] Fig. 1B is a diagram explaining another form of the electrochromic device of the embodiment.
[Fig. 2] Fig. 2 is a graph showing a cyclic voltammogram of a metallo-supramolecular polymer film produced in Example 1.

[Fig. 3] Fig. 3 is photographs showing color switching (above: blue, below: transparence) by electrochemical redox of the metallo-supramolecular polymer film produced in Example 1.

[Fig. 4] Fig. 4 is a graph showing an ultraviolet and visible light transmittance spectrum change by electrochemical redox of the metallo-supramolecular polymer film produced in Example 1.

[Fig. 5] Fig. 5 is a graph showing the evaluation result of electrochromic (EC) switching properties of the metallo-supramolecular polymer film produced by Example 1.

[Fig. 6] Fig. 6 is a graph showing a relationship of the optical density difference ΔOD (difference between the colored and bleached states) to the electronic charge Qd ($C/cm^2$) injected per unit area in the metallo-supramolecular polymer film produced in Example 1.

[Fig. 7] Fig. 7 shows chemical structural formulae of ligands used in metallo-supramolecular polymers produced in Example 1 and Comparative Examples 1 to 7. Description of Embodiments

The present invention will now be described in detail.

Although the description of components described below may be made based on typical embodiments of the present invention, the present invention is not limited to such embodiments.

In this specification, a numerical range expressed using "m to n" means a range that includes the numerical values written before and after "to" as lower and upper limits.

In notations of groups (atomic groups) in this specification, notations that do not indicate substitution and unsubstitution encompass those having no substituent as well as those having a substituent, within the scope of achieving the effects of the present invention. For example, the term "alkyl group" encompasses not only an alkyl group not having a substituent (unsubstituted alkyl group) but also an alkyl group having a substituent (substituted alkyl group). This also applies to each compound.

[Metallo-supramolecular polymer]

The metallo-supramolecular polymer of this embodiment is formed by alternately linking metal cations and organic ligands through coordinate bonds.

<Organic ligand>

The organic ligand includes a tris(terpyridine) compound represented by the following formula (B) and a bis(terpyridine) compound represented by the following formula (L).

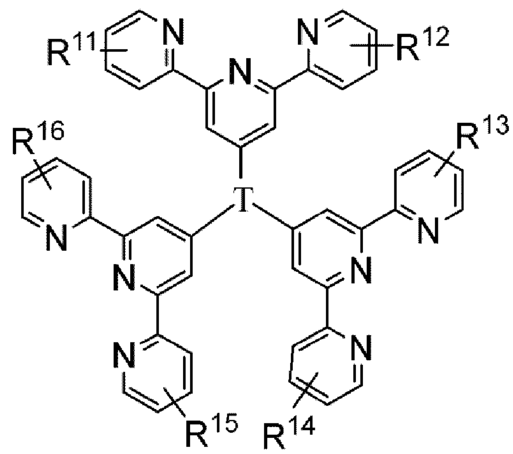

(B)

In the formula (B),

$R^{11}$, $R^{12}$, $R^{13}$, $R^{14}$, $R^{15}$, and $R^{16}$ are each one atom or functional group selected from the group consisting of a hydrogen atom, an alkyl group, an alkoxyl group, and an aryl group and may be same or different; and

T is a trivalent group and is selected from the group consisting of a trivalent aryl group obtained by removing 3 hydrogen atoms from benzene, a trivalent heterocyclic group obtained by removing 3 hydrogen atoms from a 6-membered heterocyclic compound, a methine group (CH), and a nitrogen atom (N).

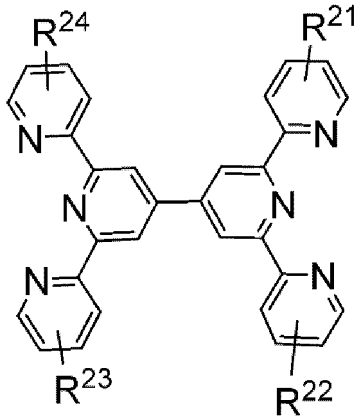

(L)

In the formula (L),
$R^{21}$, $R^{22}$, $R^{23}$, and $R^{24}$ are each one atom or functional group selected from the group consisting of a hydrogen atom, an alkyl group, an alkoxyl group, and an aryl group and may be same or different.

The tris(terpyridine) compound represented by the formula (B) will be described. In the trivalent group T, the trivalent aryl group obtained by removing 3 hydrogen atoms from benzene is not particularly limited, but is preferably a group represented by the following formula (I) in which the hydrogen atoms at positions 1, 3, and 5 of the benzene ring are removed.

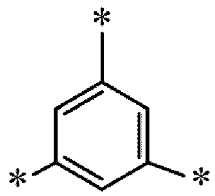

(I)

In the formula (I), * represents binding sites.

In the trivalent group T, the trivalent heterocyclic group obtained by removing 3 hydrogen atoms from a 6-membered heterocyclic compound is not particularly limited and may be a saturated compound or an unsaturated compound. The type of the hetero element in the trivalent heterocyclic group is not particularly limited, and may be, for example, nitrogen, oxygen, or sulfur. The number of the hetero element in the trivalent heterocyclic group is not particularly limited and may be, for example, 1 to 3. The trivalent heterocyclic group is preferably a group obtained by removing one hydrogen atom from each of 3 elements that are not adjacent to each other in 6 elements constituting of a 6-membered ring. Examples of the trivalent heterocyclic group include groups obtained by removing 3 hydrogen atoms from a heterocyclic compound such as a 1,3,5-triazine and pyridine.

In the formula (B), from the viewpoint of more enhancing the coloration efficiency, the trivalent group T is preferably a trivalent aryl group obtained by removing 3 hydrogen atoms from benzene, a trivalent heterocyclic group obtained by removing 3 hydrogen atoms from a 6-membered heterocyclic compound, or a methine group, in particular, more preferably a trivalent aryl group, and further more preferably a group represented by the formula (I) above.

In the formula (B), the alkyl groups of $R^{11}$, $R^{12}$, $R^{13}$, $R^{14}$, $R^{15}$, and $R^{16}$ are not particularly limited, but examples thereof include linear or branched alkyl groups having 1 to 20 carbon atoms. The alkoxyl group is not particularly limited, but examples thereof include linear or branched alkoxyl groups having 1 to 20 carbon atoms. The aryl group is not particularly limited, but examples thereof include aryl groups having 1 to 20 carbon atoms.

More specifically, examples of $R^{11}$, $R^{12}$, $R^{13}$, $R^{14}$, $R^{15}$, and $R^{16}$ include a methyl group, an ethyl group, an n-butyl group, a t-butyl group, a methoxy group, an ethoxy group, a butoxy group, a phenyl group, and a toluyl group.

These alkyl group, alkoxyl group, and aryl group may further have substituents. Examples of the substituent include alkyl groups such as a methyl group, an ethyl group, and a hexyl group; alkoxyl groups such as a methoxy group and a butoxy group; and halogen groups such as chlorine and bromine.

From the viewpoint of more enhancing the coloration efficiency, in the formula (B), $R^{11}$, $R^{12}$, $R^{13}$, $R^{14}$, $R^{15}$, and $R^{16}$ may be all hydrogen, and the T group, which is a trivalent group may be a group represented by the formula (I). That is, the tris(terpyridine) compound represented by the formula (B) may be a compound represented by the following formula (B-1):

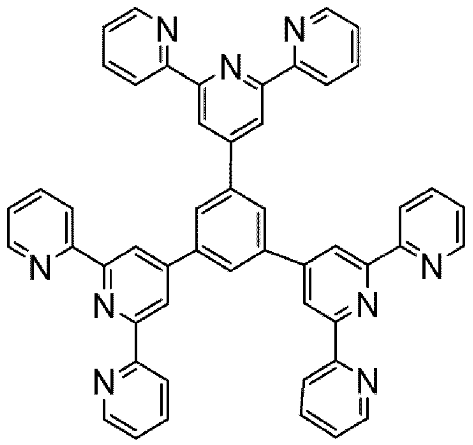

(B－1)

The tris(terpyridine) compound represented by the formula (B) may be a single compound or a mixture of two or more compounds. The tris(terpyridine) compound represented by the formula (B) may be a commercially available one or may be inhouse synthesized. The synthesis method is not particularly limited, and a known synthesis method, for example, the method disclosed in Non Patent Literature 1, may be adopted.

The bis(terpyridine) compound represented by the formula (L) will be then described. In the formula (L), preferred forms of the alkyl group, alkoxyl group, and aryl group of $R^{21}$, $R^{22}$, $R^{23}$, and $R^{24}$ are the same as the preferred forms of the alkyl group, alkoxyl group, and aryl group of above-mentioned $R^{11}$, $R^{12}$, $R^{13}$, and $R^{14}$.

From the viewpoint of more enhancing the coloration efficiency, in the formula (L), $R^{21}$, $R^{22}$, $R^{23}$, and $R^{24}$ may be all hydrogen. That is, the bis(terpyridine) compound represented by the formula (L) may be a compound represented by the following formula (L-1):

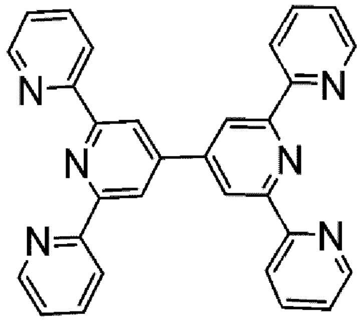

(L－1)

The bis(terpyridine) compound represented by the formula (L) may be a single compound or a mixture of two or more compounds. The bis(terpyridine) compound represented by the formula (L) may be a commercially available one or may be inhouse synthesized. The synthesis method is not particularly limited, and a known synthesis method, for example, the method disclosed in Non Patent Literature 1, may be adopted.

The bis(terpyridine) compound has two (two positions of) coordination sites (terpyridine structures) to a metal, and the tris(terpyridine) compound has three (three positions of) coordination sites to a metal. When only the bis(terpyridine) compound is used as the ligand, the metallo-supramolecular polymer becomes a linear polymer. In contrast, the metallo-supramolecular polymer of this embodiment includes the tris(terpyridine) compound as a ligand, in addition to the bis(terpyridine) compound, and therefore becomes a branched polymer (network polymer). The metallo-supramolecular polymer of this embodiment preferably has a trifunctional branch point derived from the structure of the tris(terpyridine) compound, for example, a trifunctional branch point represented by a formula (II):

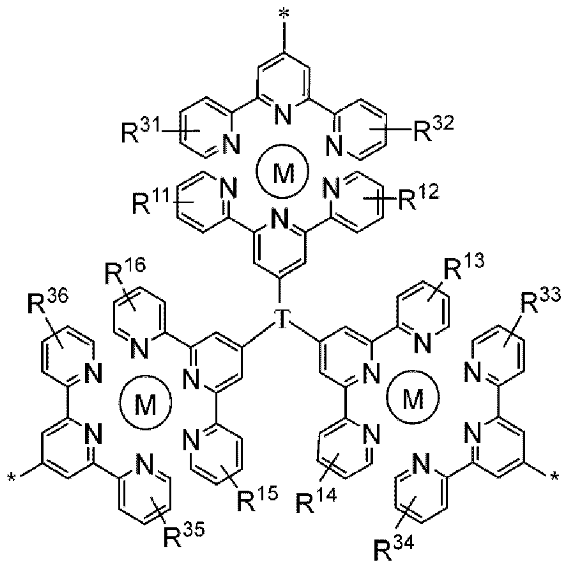

(II)

In the formula (II), M is a metal cation, and * represents binding sites. $R^{11}$, $R^{12}$, $R^{13}$, $R^{14}$, $R^{15}$, and $R^{16}$ and T are the same as those in the formula (B) above. $R^{31}$, $R^{32}$, $R^{33}$, $R^{34}$, $R^{35}$, and $R^{36}$ are each one atom or functional group selected from the group consisting of a hydrogen atom, an alkyl group, an alkoxyl group, and an aryl group and may be same or different. Preferred forms of the alkyl group, alkoxyl group, and aryl group of $R^{31}$, $R^{32}$, $R^{33}$, $R^{34}$, $R^{35}$, and $R^{36}$ are the same as the preferred forms of the alkyl group, alkoxyl group, and aryl group of the above-mentioned $R^{11}$, $R^{12}$, $R^{13}$, $R^{14}$, $R^{15}$, and $R^{16}$.

The metallo-supramolecular polymer of this embodiment may not have a fully branched structure. The metallo-supramolecular polymer of this embodiment preferably has a trifunctional branch point represented by the formula (II) above and also has a linear portion derived from the structure of the bis(terpyridine) compound, for example, a structure represented by the following formula (III):

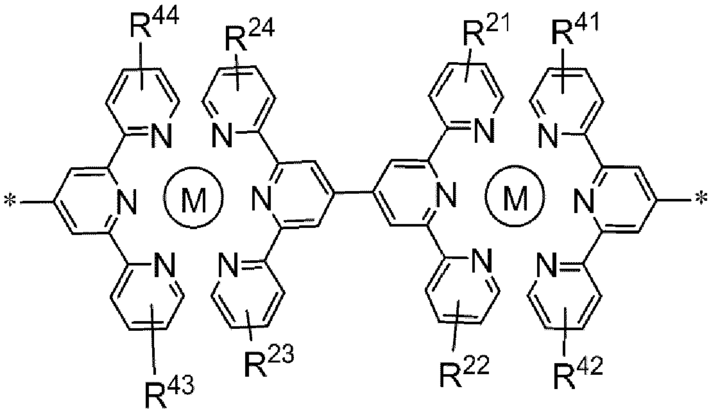

(III)

In the formula (III), M is a metal cation, and * represents binding sites. $R^{21}$, $R^{22}$, $R^{23}$, and $R^{24}$ are the same as those in the formula (L) above. $R^{41}$, $R^{42}$, $R^{43}$, and $R^{44}$ are each one atom or functional group selected from the group consisting of a hydrogen atom, an alkyl group, an alkoxyl group, and an aryl group and may be same or different. Preferred forms of the alkyl group, alkoxyl group, and aryl group of $R^{41}$, $R^{42}$, $R^{43}$, and $R^{44}$ are the same as the preferred forms of the alkyl group, alkoxyl group, and aryl group of the above-mentioned $R^{21}$, $R^{22}$, $R^{23}$, and $R^{24}$.

The proportion of the molar number of the tris(terpyridine) compound (ligand) to the total molar number of the tris(terpyridine) compound (ligand) and the bis(terpyridine) compound (ligand), B/(B+L), in the metallo-supramolecular polymer is defined as "branching rate" (%).

Although a method for synthesizing the metallo-supramolecular polymer is described later, the metallo-supramolecular polymer is obtained almost quantitatively. Accordingly, the "preparation" ratio (i.e., the content ratio of each ligand in a "mixture" described later) at the time of synthesis can be regarded as the branching rate in the polymer.

The branching rate is not particularly limited and may be, for example, greater than 0%, 5% or more, 10% or more, 20% or more, or 50% or more and at the same time, less than 100%, 80% or less, 60% or less, 50% or less, 40% or less, 30% or less, or 10% or less. The branching rate may be greater than 0% and 30% or less or 5% to 20%.

The metallo-supramolecular polymer of this embodiment preferably includes only a tris(terpyridine) compound (ligand (B)) represented by the formula (B) and a bis(terpyridine) compound (ligand (L)) represented by the formula (L) as organic ligands, from the viewpoint of more enhancing the coloration efficiency, but may include another ligand within a range that exhibits the effect of this embodiment. The proportion of the total molar number of the ligand (B) and the ligand (L) to the total molar number of all ligands constituting the metallo-supramolecular polymer may be, for example, 100 mol%, 98mol% or more, or 95mol% or more.

Even when another ligand is included, the metallo-supramolecular polymer of this embodiment is constituted of symmetric ligands.

<Metal cation>

The metal cation constituting the metallo-supramolecular polymer is not particularly limited, but is preferably, for example, a 6-coordinate metal cation such as iron (Fe), cobalt (Co), ruthenium (Ru), and osmium (Os). The metal cation constituting the metallo-supramolecular polymer may be a single type of cation or a mixture of two or more types of cation.

When the metal cation is six-coordinated, it is preferable that two ligand coordination sites (terpyridine structures) coordinate with one metal cation. That is, a form in which the metal cation and the ligand coordination site are coordinate-bonded in a molar ratio of 1 : 2 is preferred.

The molar ratio of the total molar number of the coordination sites of the ligands (B) and (L) to the molar number of the metal cation, (coordination site/metal cation), can be appropriately adjusted by considering the coordination number of the metal cation, the branching rate of the ligand, and so on, and is, for example, preferably 1.0 to 3.0 and more preferably 1.5 to 2.5. That is, the metallo-supramolecular polymer may not have a fully branched structure, and either the molar number of the metal cation or the total molar number of the coordination sites of the ligands (B) and (L) may be excessive.

The metallo-supramolecular polymer according to an embodiment of the present invention has a branched structure and therefore has excellent solvent resistance. In contrast, when an electrochromic device is produced by a coating technique, it is better that the metallo-supramolecular polymer has an adequate solubility in some cases.

In such a case, the molar ratio of coordination site/metal cation in the synthesis method described later is, as one form, preferably adjusted to be greater than 2.0 and 2.5 or less, more preferably 2.3 or less, and further preferably 2.2 or less. As another form, the molar ratio is preferably adjusted to be 1.5 or more and less than 2.0, more preferably 1.7 or more, and further preferably 1.9 or more.

When the molar ratio of coordination site/metal cation is within the above numerical value range, the resulting metallo-supramolecular polymer has excellent solubility. This tendency is more significant as the branching rate of the metallo-supramolecular polymer increases. The above tendency is more significant as the complexation (association) constant in a combination of a coordination site and a metal cation increases.

<Counter anion>

The metallo-supramolecular polymer may include a counter anion. The charge on the polymer containing a counter anion is more likely to remain neutral, and as a result, the stability of the polymer is more improved.

The counter anion is not particularly limited, and examples thereof include an acetate ion, a phosphate ion, a chlorine ion, a phosphorus hexafluoride ion, a boron tetrafluoride ion, a perchlorate ion, a triflate ion, and a polyoxometalate. Good electrochromic properties (high contrast, high response speed, and so on) tend to be obtained when including a soft counter anion compared to when including a hard counter anion. Examples of the counter anion include $ClO_4^-$, $PF_6^-$, $CF_3SO_3^-$, and $(CF_3SO_2)_2N^-$. The counter anion may be constituted of a single type of anion or a mixture of two or more types of anions.

The counter anion may be intentionally added to a mixture for reaction or may be contained in a composition unintentionally during the synthesis process of the metallo-supramolecular polymer or derived from a synthetic raw material of the metallo-supramolecular polymer (typically, the counter anion contained in the salt of a metal cation). Furthermore, the counter anion may be added intentionally after synthesis of the metallo-supramolecular polymer, or may be substituted with the counter anion included in the electrolyte layer of an electrochromic device. The content of the counter anion in the composition is not particularly limited. Typically, when the counter anion is supplied from a salt of a metal cation (a metal salt), the content of the metal salt in the composition is not particularly limited and may be appropriately selected.

Since the polymer chain of the metallo-supramolecular polymer is formed by coordinate bonds, unlike organic polymers such as polyethylene, an equilibrium reaction may occur in the solution. In such a case, the polymer chain length changes depending on the concentration and temperature of the polymer solution. However, the weight average molecular weight (Mw) of the metallo-supramolecular polymer at a concentration of 1 mg/mL is preferably about 3000 or more and more preferably 10000 or more at room temperature.

The metallo-supramolecular polymer of this embodiment described above has the following advantages. First,

the metallo-supramolecular polymer of this embodiment has reversible electrochromic properties by the electrochemical redox of the metal ion. Since the metallo-supramolecular polymer can be formed into a film by coating on an electrode substrate under atmospheric conditions, the base material is not required to have heat resistance, and it is possible to produce a flexible electrochromic dimming film device.

All ligands of the metallo-supramolecular polymer of this embodiment are symmetric ligands having the same chemical structures (terpyridine structures) at all coordination sites. Consequently, when used as an electrochromic material, the metallo-supramolecular polymer has a high color purity compared to asymmetric ligands.

Furthermore, when the metallo-supramolecular polymer of this embodiment is used as an electrochromic material, a high coloration efficiency is obtained. The coloration efficiency increases when a large transmittance difference is generated by a small amount of charge. Accordingly, the coloration efficiency is an indicator indicating the energy-saving performance of an electrochromic material. The coloration efficiency of the metallo-supramolecular polymer of this embodiment may be, for example, 700 $cm^2/C$ or more, 800 $cm^2/C$ or more, 900 $cm^2/C$ or more, 1000 $cm^2/C$ or more, or 1100 $cm^2/C$ or more.

The reason why the metallo-supramolecular polymer of this embodiment exhibits high coloration efficiency is conjectured as follows. In the tris(terpyridine) compound as a ligand, the size of the trivalent group T, which is a structure other than the coordination site (terpyridine structure), is small as shown in the formula (B). In the bis(terpyridine) compound represented by the formula (L), two coordination sites (terpyridine structures) are bonded by a single bond, and there is no structure other than the coordination sites. Furthermore, the metallo-supramolecular polymer of this embodiment includes the tris(terpyridine) compound and is therefore a branched polymer (network polymer). Thus, in the metallo-supramolecular polymer of this embodiment, which is a branched polymer with the small structure other than the coordination site, the ratio of the metal complex structure in a molecule is high, and it is inferred that a high coloration efficiency is consequently obtained. Also in Examples described later, the metallo-supramolecular polymer (Example 1) of this embodiment exhibited a high coloration efficiency, compared to polymers (Comparative Examples 1 to 7) using ligands (formulae (B-2) and (L-2) in Fig. 7) of which the structure other than the coordination site is relatively large and a linear polymer (Comparative Example 2) not including the tris(terpyridine) compound. The mechanism described above is speculation and does not affect the interpretation of the scope of the present invention in any way.

[Method for synthesizing metallo-supramolecular polymer]

The synthesis method of the metallo-supramolecular polymer is not particularly limited. Examples thereof include a method of preparing a mixture including organic ligands that are a tris(terpyridine) compound represented by the formula (B) and a bis(terpyridine) compound represented by the formula (L) and including a salt of a metal cation and applying energy to the mixture (typically, performing heating and/or irradiation with microwaves). The mixture may further include a solvent.

Examples of the salt of a metal cation, typically, a salt (metal salt) of a metal cation and the above-described counter ion, including an acetate, a sulfate, a carbonate, a perchlorate, a tetrafluoroborate, a hexafluorophosphate, and a chloride. The content ratio of the organic ligand and the salt in the mixture is not particularly limited, but from the viewpoint that the reaction progresses more easily, the molar content ratio of the total content of the coordination sites of the organic ligands to the total content of the metal cations in the mixture (the total of a first mixture liquid (mixture or mixed solution) and a second mixture liquid described later), (coordination sites of organic ligands/metal cations), is preferably 1.0 to 3.0 and more preferably 1.5 to 2.5. The ratio of the tris(terpyridine) compound represented by the formula (B) and the bis(terpyridine) compound represented by the formula (L) as the organic ligands can be appropriately adjusted based on the branching rate of the target polymer as described above.

The solvent included in the mixture is not particularly limited, but examples thereof include water, organic solvents, and mixtures thereof. The organic solvent is not particularly limited, but examples thereof include ethylene glycol, ethanol, methanol, chloroform, NMP (N-methyl-2-pyrrolidone), dimethylformamide, dichloromethane, acetic acid, and dimethyl sulfoxide.

The content of the solvent in the mixture is not particularly limited, but in general, the solid content in the mixture is preferably 0.0001 to 30 mass%. The reaction temperature is not particularly limited, but is preferably 60°C to 140°C. The reaction time is not particularly limited, but is preferably 12 to 36 hours.

As the method for applying energy to the mixture, irradiation with microwaves described in Japanese Unexamined Patent Application Publication No. 2018-145244 may be adopted, in addition to heating. The metallo-supramolecular polymer obtained by microwave irradiation has a more excellent structural order.

In this embodiment, a salt (metal salt) of a metal cation and ligands (B) and (L) may be all simultaneously mixed and heated to react them. In contrast, a target branched metallo-supramolecular polymer (metallo-supramolecular polymer having a branched structure) may be manufactured by at first mixing a part of the salt of a metal cation and a ligand (L) to obtain a first mixture liquid, heating the mixture liquid to synthesize a linear polymer (linear metallo-supramolecular polymer precursor), then mixing the synthesized linear polymer with the remaining salt of a metal cation

and a ligand (B) to obtain a second mixture liquid, and heating the second mixture liquid. The latter method is more preferable.

[Electrochromic device]

Fig. 1A shows an example of an electrochromic device 100 including a metallo-supramolecular polymer of this embodiment. The electrochromic device 100 includes a first transparent electrode 101, a composition layer 102 containing a metallo-supramolecular polymer, a polymer solid electrolyte 103, and a second transparent electrode 104. These components are stacked in this order.

The first transparent electrode 101 and the second transparent electrode 104 are arranged so as to face each other to constitute a pair of electrodes. The composition layer 102 containing a metallo-supramolecular polymer is disposed on (in contact with) the first transparent electrode 101. The polymer solid electrolyte 103 is disposed on the composition layer 102 containing a metallo-supramolecular polymer. The second transparent electrode 104 (the other electrode of a pair of the electrodes) is disposed on the polymer solid electrolyte 103.

In the electrochromic device 100, since both of a pair of the electrodes arranged so as to face each other are transparent electrodes and allow external light to pass therethrough, it is preferable to use the electrochromic device 100 as a dimming apparatus. When the electrochromic device is used as a display device, it is sufficient that at least one of the electrodes is a transparent electrode. In the display device, the side of the transparent electrode is preferably the visual recognition side.

The electrochromic device 100 includes the polymer solid electrolyte 103 between the second transparent electrode 104 and the composition layer 102. The electrochromic device of this embodiment is not limited to the above, and may not include the polymer solid electrolyte.

In the electrochromic device 100 of this embodiment, the first transparent electrode 101 and the composition layer 102 containing the metallo-supramolecular polymer constitute a working electrode. The second transparent electrode 104 and the polymer solid electrolyte 103 constitute a counter electrode.

The first transparent electrode 101 and the second transparent electrode 104 are not particularly limited as long as they are transparent conductive films. In general, a $SnO_2$ film, an $In_2O_3$ film, and a film of ITO (indium tin oxide) that is a mixture of $In_2O_3$ and $SnO_2$ are preferable. The first transparent electrode 101 and the second transparent electrode 104 can be formed on a transparent substrate such as a glass substrate by arbitrary physical or chemical vapor deposition.

The composition layer 102 is a layer formed of a composition containing the metallo-supramolecular polymer already been described and a counter anion. The method for forming the composition layer 102 is not particularly limited, but examples thereof include typically a method of applying a composition containing a solvent to the first transparent electrode 101. Examples of the method for application include spin coating, spray coating, and dip coating. Alternatively, the composition layer 102 can also be made by producing a sheet of a composition containing the metallo-supramolecular polymer and a counter anion and directly pasting the sheet onto the first transparent electrode 101.

The thickness of the composition layer 102 can vary by the color intensity and so on of the composition to be used. In one embodiment, the thickness of the composition layer 102 is about 0.02 to 200 $\mu$m and may be more preferably 0.1 to 10 $\mu$m.

The polymer solid electrolyte 103 is formed by dissolving an electrolyte in a matrix polymer. This electrolyte may be used with a colorant for improving contrast. When there is no need to improve contrast, the colorant is not necessary. When a polymer solid electrolyte is used, the thickness of the polymer solid electrolyte 103 is not particularly limited, but is desirably about 10 $\mu$m or more so that the composition layer 102 and the second transparent electrode 104 are not physically in contact with each other by vibration and so on during the use of the device.

Operation of the electrochromic device 100 will now be described. The first transparent electrode 101 and the second transparent electrode 104 are connected to a power source (not shown). The power source applies a predetermined voltage to the composition layer 102 and the polymer solid electrolyte 103. Consequently, redox of the metallo-supramolecular polymer in the composition layer 102 is controlled. More specifically, the redox reaction of the metal cation of the metallo-supramolecular polymer in the composition layer 102 is controlled by application of a predetermined voltage. As a result, coloring and bleaching of the electrochromic device 100 can be controlled. The electrochromic device can be applied to a dimming apparatus, a display apparatus, and so on.

Although the electrochromic device 100 shown in Fig. 1A has been described above, the electrochromic device of this embodiment is not limited to the form shown in Fig. 1A. For example, the electrochromic device may further include a counter electrode material layer. Fig. 1B is an explanatory drawing of an electrochromic device 200 having a counter electrode material layer 105, according to another form of this embodiment.

The electrochromic device 200 shown in Fig. 2 includes a counter electrode material layer 105 between the polymer solid electrolyte 103 and the second transparent electrode 104, unlike the electrochromic device 100 shown in Fig. 1. In the electrochromic device 200, a first transparent electrode 101 and a composition layer 102 containing the metallo-supramolecular polymer constitute a working electrode. A second transparent electrode 104 and the counter

electrode material layer 105 constitute a counter electrode.

The counter electrode material layer 105 can be produced, for example, using the material disclosed in PCT International Publication No. WO 2019/177160 by the method disclosed in the same publication. The counter electrode material layer 105 is preferably a metal complex electrochromic film. The metal complex electrochromic film may be, for example, a film of metal hexacyanoferrate (MHCF) represented by a formula: $M(II)_3[Fe(III)CN_6]_2$ (in the formula, M is at least one selected from Fe, Ni, and Zn). The electrochromic device 200 shows a lower driving voltage or operation potential by combining a counter electrode including the counter electrode material layer 105 containing these specific materials with a working electrode including the metallo-supramolecular polymer of this embodiment.

Examples

The present invention will be described in further detail based on the following Examples. The materials, usage amounts, proportions, processing contents, processing procedures, and so on shown in the following Examples can be changed as appropriate without departing from the gist of the present invention. Accordingly, the scope of the present invention should not be construed as being limited by the Examples shown below.

[Example 1]

(1) Synthesis of metallo-supramolecular polymer

In this Example, an iron ion ($Fe^{2+}$) was used as the metal cation. The tris(terpyridine) compound represented by the formula (B-1) in Fig. 7 (hereinafter, also referred to as "ligand (B-1)") and the bis(terpyridine) compound represented by the formula (L-1) (hereinafter, also referred to as "ligand (L-1)") were mixed so that the branching rate was 10%, and the mixture was used as the organic ligand. The organic ligand and the $Fe^{2+}$ ion were used at a molar ratio, (organic ligand) : ($Fe^{2+}$ ion), of 1 : 1.

In a reaction flask, the ligand (L-1) (0.45 mmol, two coordination sites/molecule) and iron(II) acetate (0.45 mmol) were mixed with pure acetic acid (100 mL) saturated with argon. The mixture liquid was heated at 70°C for 16 hours to synthesize a linear polymer (the molar ratios were ligand (L-1) : iron ion = 1 : 1 and coordination site : iron ion = 2 : 1). Subsequently, the ligand (B-1) (0.05 mmol, three coordination sites/molecule) dissolved in chloroform (10 mL) and iron(II) acetate (0.05 mmol) were added to the reaction flask. The mixture in the reaction flask was refluxed at 130°C for 24 hours (the molar ratios were ligand (B-1) : iron ion = 1 : 1 and coordination site : iron ion = 3 : 1, and the total molar ratio, coordination site/metal cation, was 2.1).

After cooling to room temperature, the mixture after the reaction was filtered to remove a small amount of insoluble residues. The filtrate was transferred to a petri dish and was dried by gradually evaporating away the solvent at room temperature. The resulting solid (fragile film) was washed with chloroform, then collected, and dried in vacuum overnight to obtain the target metallo-supramolecular polymer (percent yield: 90% or more).

(2) Formation of film of metallo-supramolecular polymer

The synthesized metallo-supramolecular polymer was formed into a film by spin coating on glass coated with ITO. The synthesized polymer was dissolved in dry methanol to prepare a polymer solution (polymer concentration: 3 mg/mL). The prepared polymer solution (100 $\mu$L) was formed into a film on ITO glass (2.5 cm $\times$ 2.5 cm) by spin coating at 120 rpm for 600 seconds. The resulting polymer film was dried at room temperature for 1 hour before evaluation.

(3) Electrochemical evaluation of metallo-supramolecular polymer

The ITO glass coated with the polymer produced above was used as a working electrode, a platinum coil was used as a counter electrode, and Ag/AgCl (KCl) was used as a reference electrode. These three electrodes were arranged in an acetonitrile solution containing 0.1 M lithium perchlorate electrolyte to produce a three-electrode solution-based electrochemical cell (hereinafter, also referred to as "three-electrode-based electrochemical cell"). The electrochemical evaluation described below was carried out using this three-electrode-based electrochemical cell.

<Measurement of cyclic voltammogram>

The cyclic voltammogram of the polymer film of this Example was measured using the three-electrode-based electrochemical cell at a scan speed of 50 mV/sec. The result is shown in Fig. 2. As shown in Fig. 2, the polymer film of this Example showed one reversible redox wave with a half-wave potential ($E_{1/2}$) of 0.82 V (vs. Ag/$Ag^+$). The redox potential means oxidation of the metal center, the iron ion, of the polymer: Fe(II) $\rightarrow$ Fe(III). As shown in Fig. 3, the redox of the

polymer film was accompanied bycolor switching from blue color of the polymer film (potential: 0 V, reduced state: Fe(II)) to colorless (potential: 1.2 V, oxidized state: Fe(III)). That is, it was confirmed that the polymer film of this Example shows electrochromic properties (EC properties).

<Measurement of ultraviolet and visible light transmittance spectrum>

The ultraviolet and visible light transmittance spectra of the polymer film were measured using the three-electrode-based electrochemical cell when potentials (voltages) of 0 V and 1.2 V (vs. Ag/Ag+) were applied. The results are shown in Fig. 4. In the reduced state, Fe(II), at a potential of 0 V, the film showed a strong absorption peak (a decrease in transmittance) at 596 nm. This absorption peak corresponds to the blue color observed in Fig. 3. Coloring to blue results from MLCT (metal to ligand charge transfer) transition, which is charge transfer from the metal center (iron ion) to the organic ligand. Since the metal center is reversibly oxidized by applying a positive voltage (1.2 V) to the polymer film, the strong absorption peak resulting from MLCT transition disappeared, and the film changed to colorless. Thus, the electrochromic properties of the polymer film of this Example are exhibited by reversible appearance and disappearance of the MLCT band at 596 nm by application of a potential (voltage).

<Evaluation of EC switching properties>

The EC switching properties of the polymer film were evaluated. The applied potential (voltage) was repeatedly switched between 0 and 1.2 V at 10 second intervals, and the change in the transmittance of the polymer film at 596 nm during this continuous cycle was monitored. In the transmittance measurement, ITO not coated with the polymer was used as the blank. The results are shown in Fig. 5. As shown in Fig. 5, the polymer film of this Example maintained the original transmittance change in the repeated measurement to show sufficient redox stability. The maximum optical contrast (ΔT) observed in the polymer film of this Example was 69% (the transmittance in the colored state Tc = 8.32%, the transmittance in the transparent state Tb = 77.63%, ΔT = Tb - Tc = 69%).

<Coloration efficiency>

The coloration efficiency (η: $cm^2/C$) is defined by the following equation:

$$\eta = \frac{\Delta \mathrm{OD}}{Q_\mathrm{d}} = \log \frac{T_\mathrm{b}}{T_\mathrm{c}} / Q_\mathrm{d}$$

In the equation above, ΔOD represents the optical density difference between the colored and bleached states (transparent state); Qd ($C/cm^2$) represents the electronic charge injected into the electrochromic material per unit area; Tc (%) represents the transmittance in the colored state; and Tb (%) represents the transmittance in the transparent state.

In principle, the coloration efficiency η is obtained as the slope of a linear plot of Qd vs. ΔOD (Fig. 6). The coloration efficiency η of the polymer film of this Example calculated from Fig. 6 was 1294 $cm^2/C$.

Table 1 shows evaluation results of main electrochemical properties of the metallo-supramolecular polymer of this Example.

Table 1

| Evaluation results of main electrochemical properties of metallo-supramolecular polymer of Example 1 | |
|---|---|
| Half-wave potential $E_{1/2}$ | 0.82 V (vs. $Ag/Ag^+$) |
| Transmittance Tc in colored state | 8.32% |
| Transmittance Tb in transparent state | 77.63% |
| ΔT = Tb - Tc | 69% |
| Coloration efficiency η | 1294 $cm^2/C$ |

[Comparative Examples 1 to 7]

In Comparative Examples 1 to 7, metallo-supramolecular polymers were synthesized by the same method as in Example 1 except that organic ligands shown in Table 2 below were mixed at the branching rates shown in Table 2. Fig. 7

shows chemical structure formulae of the ligands used in Comparative Examples 1 to 7. In Table 2, "-" means that it was not used.

Three-electrode-based electrochemical cells were manufactured respectively using the polymers synthesized in Comparative Examples 1 to 7 by the same method as in Example 1, and the coloration efficiencies thereof were determined. Table 2 shows the results.

Table 2

| | Metal ion | Organic ligand | | Branching rate (%) | Coloration efficiency ($cm^2/C$) |
|---|---|---|---|---|---|
| | | Tris (terpyridine) | Bis (terpyridine) | | |
| Example 1 | $Fe^{2+}$ | (B-1) | (L-1) | 10 | 1294 |
| Comparative Example 1 | $Fe^{2+}$ | (B-2) | (L-2) | 10 | 283 |
| Comparative Example 2 | $Fe^{2+}$ | - | (L-2) | 0 | 264 |
| Comparative Example 3 | $Fe^{2+}$ | (B-2) | (L-2) | 5 | 287 |
| Comparative Example 4 | $Fe^{2+}$ | (B-2) | (L-2) | 10 | 332 |
| Comparative Example 5 | $Fe^{2+}$ | (B-2) | (L-2) | 15 | 383 |
| Comparative Example 6 | $Fe^{2+}$ | (B-2) | (L-2) | 18 | 140 |
| Comparative Example 7 | $Fe^{2+}$ | (B-2) | (L-2) | 20 | 131 |

The chemical formulae (B-1) and (L-1) of the ligands used in Example 1 are encompassed in general formulae (B) and (L), respectively (see Fig. 7). The metallo-supramolecular polymer of Example 1 including such a ligand had a high coloration efficiency of 1294 $cm^2/C$.

In contrast, chemical formulae (B-2) and (L-2) of the ligands used in Comparative Examples 1 to 7 are not encompassed in the general formulae (B) and (L) (see Fig. 7). Furthermore, the ligand of Comparative Example 2 does not include the tris(terpyridine) compound. The metallo-supramolecular polymers having such ligands of Comparative Examples 1 to 7 all had coloration efficiencies of less than 400 $cm^2/C$.

[Example 2: Production of all-solid EC device]

(Coating of ITO glass with metallo-supramolecular polymer film)

The metallo-supramolecular polymer synthesized in Example 1 was dissolved in MeOH (3 mg/mL) to prepare a metallo-supramolecular polymer solution. Subsequently, this metallo-supramolecular polymer solution was filtered through a syringe filter (PVDF: polyvinylidene difluoride, pore size: 0.45 $\mu$m). Consequently, insoluble residues were removed from the metallo-supramolecular polymer solution.

Before producing the metallo-supramolecular polymer film, ITO glass was exposed to ultraviolet ozone for 20 minutes. Subsequently, the filtered metallo-supramolecular polymer solution was applied onto the ITO glass and was produced as a smooth and uniform film by spin coating (about 100 $\mu$L of the metallo-supramolecular polymer solution was applied to ITO glass of 2.5 $\times$ 2.5 cm).

In order to suppress elution of the metallo-supramolecular polymer into the liquid electrolyte, surface treatment was performed three times using a high-viscosity gel electrolyte consisting of PMMA (Tokyo Chemical Industry Co., Ltd. (TCI), 2.1 g), $LiClO_4$ (0.9 g), PC (propylene carbonate, 6 mL), and ACN (acetonitrile, 21 mL).

(Production of counter electrode NiHCF thin film)

An ITO glass substrate was ultrasonic cleaned in acetone. After cleaning, the ITO glass substrate was exposed to a UV-ozone chamber for 20 minutes. A thin NiHCF counter electrode material layer was produced on the ITO glass substrate after the exposure using an aqueous solution of NiHCF (nickel hexacyanoferrate, $Ni(II)_3[Fe(III)CN_6]_2$) by spin coating.

A liquid electrolyte composed of $LiClO_4$ (0.3 g) and propylene carbonate (2.0 mL) for a solid device were placed in a vial and were stirred for 15 minutes. Subsequently, while vigorously stirring, PMMA (poly methyl methacrylate, TCI, 2.0 g) was gradually added thereto. This mixture was stirred in vacuum for 1 hour.

(Production of all-solid EC device)

The above liquid electrolyte was dropwise added onto the ITO glass formed with the metallo-supramolecular polymer film thereon (about 1 mL of the liquid electrolyte was used for the ITO glass of 2.5 × 2.5 cm).
Subsequently, the liquid electrolyte layer was immediately covered with ITO glass applied with NiCHF for forming a counter electrolyte material layer. Subsequently, heating was performed in a thermostat chamber at 95°C in a relative humidity of 40% for 1 minute to obtain a transparent solid electrolyte. After cooling to room temperature, an all-solid ECD was obtained.
The above all-solid EC device has electrochromic properties that was shown in Fig. 3 as in the EC device produced in Example 1.

Industrial Applicability

When the metallo-supramolecular polymer of the present invention is used in an electrochromic device, the color purity and coloration efficiency are high. Consequently, the metallo-supramolecular polymer can be used in various applications such as a dimming glass device and a display apparatus.

Reference Signs List

| | |
|---|---|
| 100 | electrochromic device |
| 101 | first transparent electrode |
| 102 | composition layer |
| 103 | polymer solid electrolyte |
| 104 | second transparent electrode |
| 105 | counter electrode material layer |

**Claims**

1. A metallo-supramolecular polymer formed by alternately linking metal cations and organic ligands through coordinate bonds, wherein

    the organic ligands comprise:

        a tris(terpyridine) compound represented by a following formula (B); and
        a bis(terpyridine) compound represented by a following formula (L):

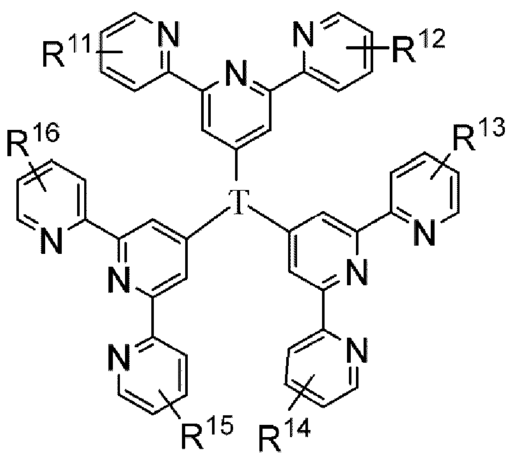

(B)

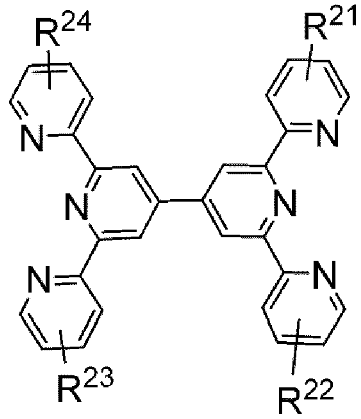

(L)

(in the formula (B),

$R^{11}$, $R^{12}$, $R^{13}$, $R^{14}$, $R^{15}$, and $R^{16}$ are each one atom or functional group selected from a group consisting of a hydrogen atom, an alkyl group, an alkoxyl group, and an aryl group and may be same or different;
T is a trivalent group and is selected from a group consisting of a trivalent aryl group obtained by removing 3 hydrogen atoms from benzene, a trivalent heterocyclic group obtained by removing 3 hydrogen atoms from a 6-membered heterocyclic compound, a methine group, and a nitrogen atom, and
in the formula (L),
$R^{21}$, $R^{22}$, $R^{23}$, and $R^{24}$ are each one atom or functional group selected from a group consisting of a hydrogen atom, an alkyl group, an alkoxyl group, and an aryl group and may be same or different).

**2.** The metallo-supramolecular polymer according to Claim 1, wherein

in the formula (B), T is
one selected from a group consisting of a trivalent aryl group obtained by removing 3 hydrogen atoms from benzene, a trivalent heterocyclic group obtained by removing 3 hydrogen atoms from a 6-membered heterocyclic compound, and a methine group.

**3.** The metallo-supramolecular polymer according to Claim 1, wherein
in the formula (B), T is a group represented by a following formula (I):

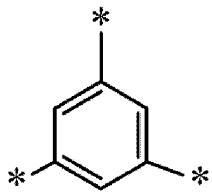

(I)

(in the formula (I), * represents binding sites).

**4.** The metallo-supramolecular polymer according to any one of Claims 1 to 3, wherein the tris(terpyridine) compound represented by the formula (B) is a compound represented by a following formula (B-1):

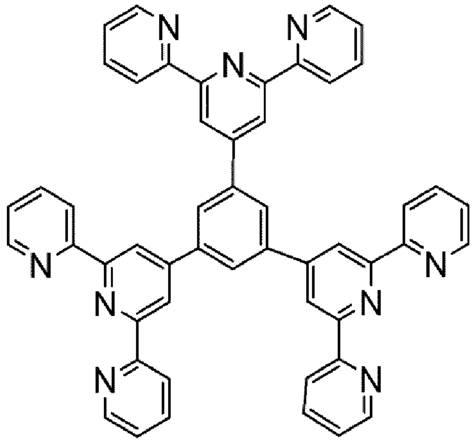

(B－1)

5. The metallo-supramolecular polymer according to any one of Claims 1 to 4, comprising a trifunctional branch point represented by a following formula (II):

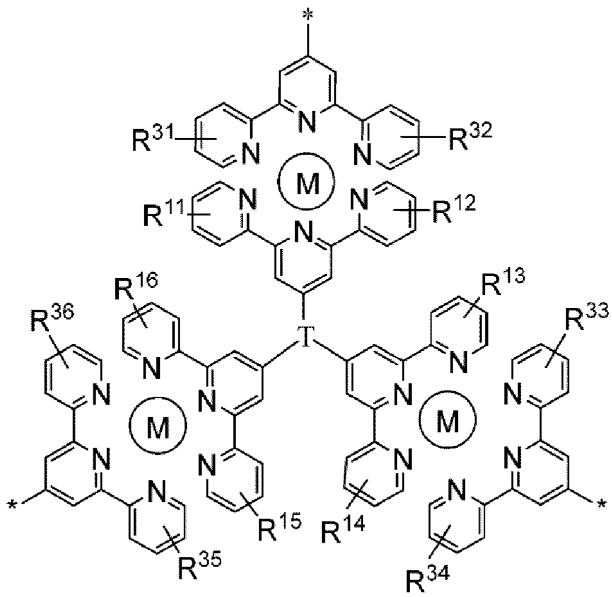

(II)

(in the formula (II),

$R^{11}$, $R^{12}$, $R^{13}$, $R^{14}$, $R^{15}$, $R^{16}$, $R^{31}$, $R^{32}$, $R^{33}$, $R^{34}$, $R^{35}$, and $R^{36}$ are each one atom or functional group selected from a group consisting of a hydrogen atom, an alkyl group, an alkoxyl group, and an aryl group and may be same or different;
M represents the metal cations;
T represents the trivalent group and is one selected from a group consisting of a trivalent aryl group obtained by removing 3 hydrogen atoms from benzene, a trivalent heterocyclic group obtained by removing 3 hydrogen atoms from a 6-membered heterocyclic compound, a methine group, and a nitrogen atom; and
* represents binding sites).

6. The metallo-supramolecular polymer according to any one of Claims 1 to 5, wherein the bis(terpyridine) compound represented by the formula (L) includes a compound represented by a following formula (L-1):

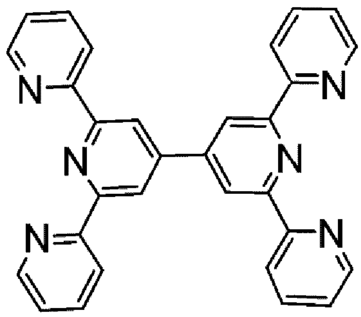

（L－1）

7. The metallo-supramolecular polymer according to any one of Claims 1 to 6, wherein the metal cations are cations of at least one metal selected from a group consisting of iron (Fe), cobalt (Co), ruthenium (Ru), and osmium (Os).

8. An electrochromic device comprising the metallo-supramolecular polymer according to any one of Claims 1 to 7.

9. A method for manufacturing the metallo-supramolecular polymer formed by alternately linking metal cations and organic ligands through coordinate bonds, the manufacturing method of the metallo-supramolecular polymer, comprising:

applying energy to a first mixture liquid containing a metal salt consisting of metal cations and counter ions, and bis(terpyridine) compounds represented by a formula (L) below to obtain a linear metallo-supramolecular polymer precursor formed by alternately linking the bis(terpyridine) compounds and the metal cations through coordinate bonds; and

applying energy to a second mixture liquid containing the metal salt, the metallo-supramolecular polymer precursor, and a tris(terpyridine) compound represented by a formula (B) below to obtain a metallo-supramolecular polymer having a branched structure derived from the tris(terpyridine) compound,

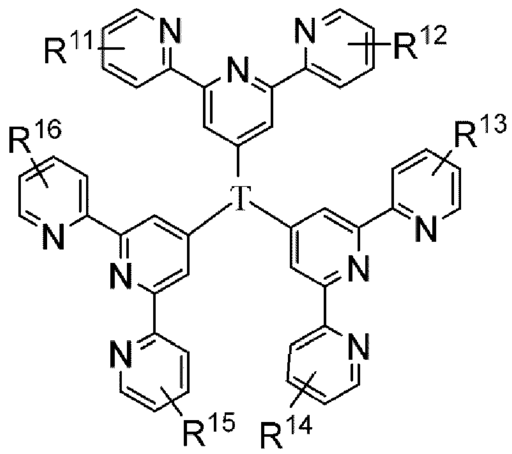

（B）

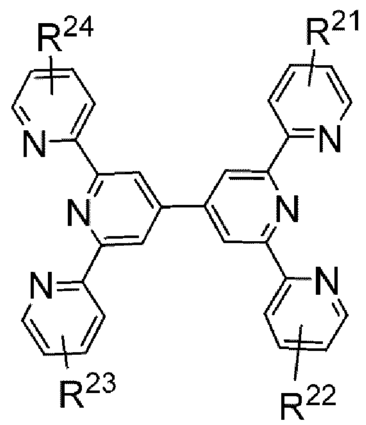

（L）

(in the formula (B),

$R^{11}$, $R^{12}$, $R^{13}$, $R^{14}$, $R^{15}$, and $R^{16}$ are each one atom or functional group selected from a group consisting of a hydrogen atom, an alkyl group, an alkoxyl group, and an aryl group and may be same or different;
T is a trivalent group and is selected from a group consisting of a trivalent aryl group obtained by removing 3 hydrogen atoms from benzene, a trivalent heterocyclic group obtained by removing 3 hydrogen atoms from a 6-membered heterocyclic compound, a methine group, and a nitrogen atom, and
in the formula (L),
$R^{21}$, $R^{22}$, $R^{23}$, and $R^{24}$ are each one atom or functional group selected from a group consisting of a hydrogen atom, an alkyl group, an alkoxyl group, and an aryl group and may be same or different).

**10.** The manufacturing method of the metallo-supramolecular polymer according to Claim 9, wherein the branched structure includes a trifunctional branch point represented by a following formula (II):

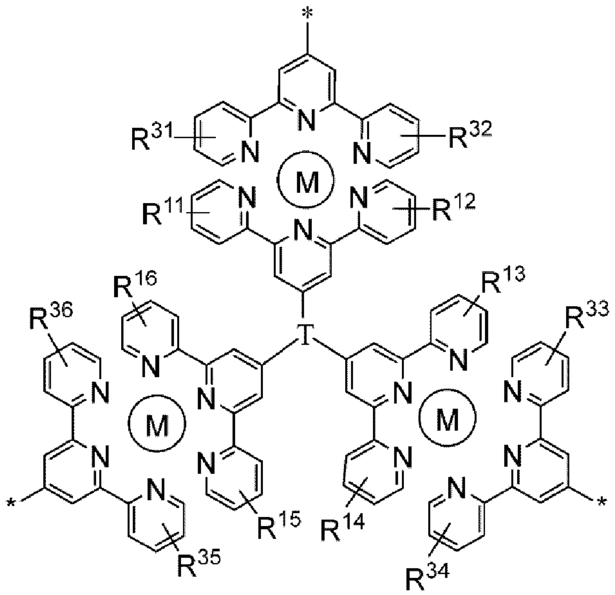

(I I)

(in the formula (II),

$R^{11}$, $R^{12}$, $R^{13}$, $R^{14}$, $R^{15}$, $R^{16}$, $R^{31}$, $R^{32}$, $R^{33}$, $R^{34}$, $R^{35}$, are $R^{36}$ are each one atom or functional group selected from a group consisting of a hydrogen atom, an alkyl group, an alkoxyl group, and an aryl group and are same or different;
M represents the metal cations;
T represents the trivalent group and is one selected from a group consisting of a trivalent aryl group obtained by removing 3 hydrogen atoms from benzene, a trivalent heterocyclic group obtained by removing 3 hydrogen atoms from a 6-membered heterocyclic compound, a methine group, and a nitrogen atom; and
* represents binding sites).

**11.** The manufacturing method of the metallo-supramolecular polymer according to Claim 9 or 10, wherein
a molar content ratio of a total content of coordination sites possessed by the bis(terpyridine) compounds and the tris(terpyridine) compounds to a total content of the metal cations contained in the first mixture liquid and the second mixture liquid is 1.0 to 3.0.

## Patentansprüche

**1.** Metallo-supramolekulares Polymer, gebildet durch abwechselndes Verbinden von Metallkationen und organischen Liganden durch koordinative Bindungen, wobei

die organischen Liganden Folgendes umfassen:

eine Tris(terpyridin)-Verbindung, dargestellt durch eine folgende Formel (B); und
eine Bis(terpyridin)-Verbindung, dargestellt durch eine folgende Formel (L):

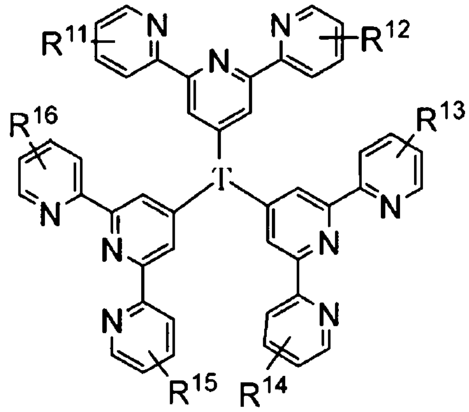

(B)

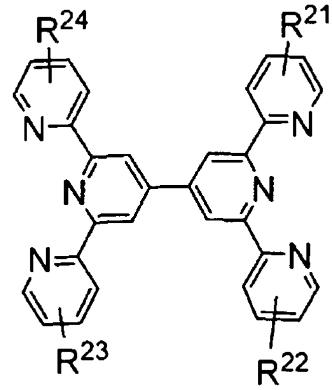

(L)

(in der Formel (B)

sind $R^{11}$, $R^{12}$, $R^{13}$, $R^{14}$, $R^{15}$ und $R^{16}$ jeweils ein Atom oder eine funktionelle Gruppe, ausgewählt aus einer Gruppe bestehend aus einem Wasserstoffatom, einer Alkylgruppe, einer Alkoxygruppe und einer Arylgruppe, und können gleich oder unterschiedlich sein;

ist T eine trivalente Gruppe und ist ausgewählt aus einer Gruppe bestehend aus einer trivalenten Arylgruppe, erhalten durch Entfernen von 3 Wasserstoffatomen von Benzol, einer trivalenten heterozyklischen Gruppe, erhalten durch Entfernen von 3 Wasserstoffatomen von einer 6-gliedrigen heterozyklischen Verbindung, einer Methingruppe und einem Stickstoffatom, und

in der Formel (L)

sind $R^{21}$, $R^{22}$, $R^{23}$ und $R^{24}$ jeweils ein Atom oder eine funktionelle Gruppe, ausgewählt aus einer Gruppe bestehend aus einem Wasserstoffatom, einer Alkylgruppe, einer Alkoxygruppe und einer Arylgruppe, und können gleich oder unterschiedlich sein).

**2.** Metallo-supramolekulares Polymer nach Anspruch 1, wobei

in der Formel (B) T Folgendes ist

eines ausgewählt aus einer Gruppe bestehend aus einer trivalenten Arylgruppe, erhalten durch Entfernen von 3 Wasserstoffatomen von Benzol, einer trivalenten heterozyklischen Gruppe, erhalten durch Entfernen von 3 Wasserstoffatomen von einer 6-gliedrigen heterozyklischen Verbindung, und einer Methingruppe.

**3.** Metallo-supramolekulares Polymer nach Anspruch 1, wobei
in der Formel (B) T eine Gruppe ist, dargestellt durch eine folgende Formel (I):

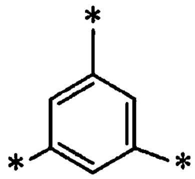

(I)

(in der Formel (I) stellt * Bindungsstellen dar).

4. Metallo-supramolekulares Polymer nach einem der Ansprüche 1 bis 3, wobei die Tris(terpyridin)-Verbindung, dargestellt durch die Formel (B), eine Verbindung ist, dargestellt durch eine folgende Formel (B-1):

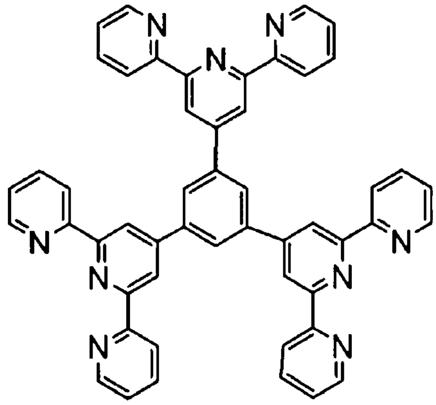

(B−1)

5. Metallo-supramolekulares Polymer nach einem der Ansprüche 1 bis 4, umfassend einen trifunktionellen Verzweigungspunkt, dargestellt durch eine folgende Formel (II):

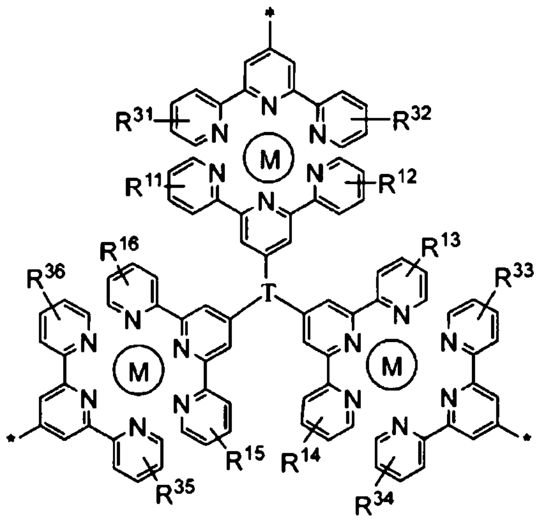

(I I)

(in der Formel II

sind $R^{11}$, $R^{12}$, $R^{13}$, $R^{14}$, $R^{15}$, $R^{16}$, $R^{31}$, $R^{32}$, $R^{33}$, $R^{34}$, $R^{35}$ und $R^{36}$ jeweils ein Atom oder eine funktionelle Gruppe, ausgewählt aus einer Gruppe bestehend aus einem Wasserstoffatom, einer Alkylgruppe, einer Alkoxygruppe und einer Arylgruppe, und können gleich oder unterschiedlich sein;
stellt M die Metallkationen dar;
stellt T die trivalente Gruppe dar und ist eines ausgewählt aus einer Gruppe bestehend aus einer trivalenten Arylgruppe, erhalten durch Entfernen von 3 Wasserstoffatomen von Benzol, einer trivalenten heterozyklischen Gruppe, erhalten durch Entfernen von 3 Wasserstoffatomen von einer 6-gliedrigen heterozyklischen Verbindung, einer Methingruppe und einem Stickstoffatom; und
stellt * Bindungsstellen dar).

6. Metallo-supramolekulares Polymer nach einem der Ansprüche 1 bis 5, wobei die Bis(terpyridin)-Verbindung, dargestellt durch die Formel (L), eine Verbindung beinhaltet, dargestellt durch eine folgende Formel (L-1):

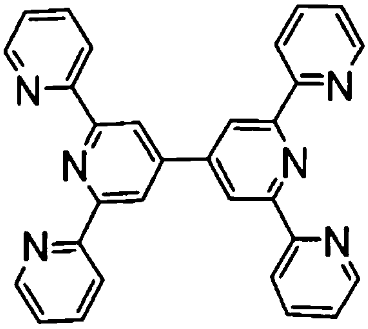

(L-1)

7. Metallo-supramolekulares Polymer nach einem der Ansprüche 1 bis 6, wobei die Metallkationen Kationen von mindestens einem Metall sind, ausgewählt aus einer Gruppe bestehend aus Eisen (Fe), Kobalt (Co), Ruthenium (Ru) und Osmium (Os).

8. Elektrochrome Vorrichtung, umfassend das metallo-supramolekulare Polymer nach einem der Ansprüche 1 bis 7.

9. Verfahren zum Herstellen des metallo-supramolekularen Polymers, gebildet durch abwechselndes Verbinden von Metallkationen und organischen Liganden durch koordinative Bindungen, wobei das Herstellungsverfahren des metallo-supramolekularen Polymers Folgendes umfasst:

Zuführen von Energie zu einer ersten Mischflüssigkeit, die ein Metallsalz, das aus Metallkationen und Gegenionen besteht, und Bis(terpyridin)-Verbindungen enthält, dargestellt durch eine Formel (L) unten, um einen linearen metallo-supramolekularen Polymervorläufer zu erhalten, der gebildet ist durch abwechselndes Verbinden der Bis(terpyridin)-Verbindungen und der Metallkationen durch koordinative Bindungen; und
Zuführen von Energie zu einer zweiten Mischflüssigkeit, die das Metallsalz, den metallo-supramolekularen Polymervorläufer und eine Tris(terpyridin)-Verbindung enthält, mit einer verzweigten Struktur, die von der Tris(terpyridin)-Verbindung abgeleitet ist,

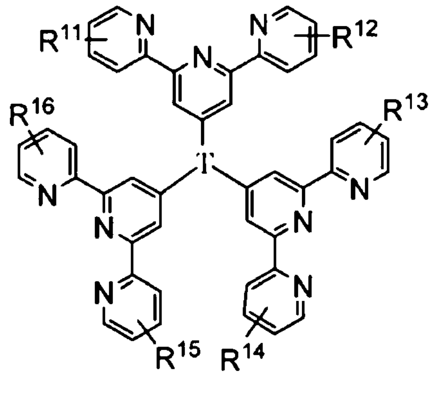

(B)

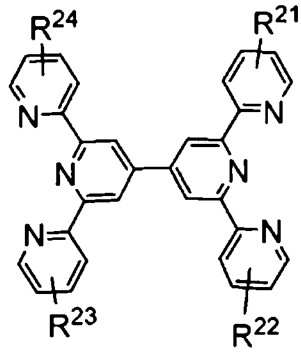

(L)

(in der Formel (B)
sind $R^{11}$, $R^{12}$, $R^{13}$, $R^{14}$, $R^{15}$ und $R^{16}$ jeweils ein Atom oder eine funktionelle Gruppe, ausgewählt aus einer Gruppe

bestehend aus einem Wasserstoffatom, einer Alkylgruppe, einer Alkoxygruppe und einer Arylgruppe, und können gleich oder unterschiedlich sein;

ist T eine trivalente Gruppe und ist ausgewählt aus einer Gruppe bestehend aus einer trivalenten Arylgruppe, erhalten durch Entfernen von 3 Wasserstoffatomen von Benzol, einer trivalenten heterozyklischen Gruppe, erhalten durch Entfernen von 3 Wasserstoffatomen von einer 6-gliedrigen heterozyklischen Verbindung, einer Methingruppe und einem Stickstoffatom, und

in der Formel (L)

sind $R^{21}$, $R^{22}$, $R^{23}$ und $R^{24}$ jeweils ein Atom oder eine funktionelle Gruppe, ausgewählt aus einer Gruppe bestehend aus einem Wasserstoffatom, einer Alkylgruppe, einer Alkoxygruppe und einer Arylgruppe, und können gleich oder unterschiedlich sein).

**10.** Herstellungsverfahren des metallo-supramolekularen Polymers nach Anspruch 9, wobei die verzweigte Struktur einen trifunktionellen Verzweigungspunkt beinhaltet, dargestellt durch eine folgende Formel (II):

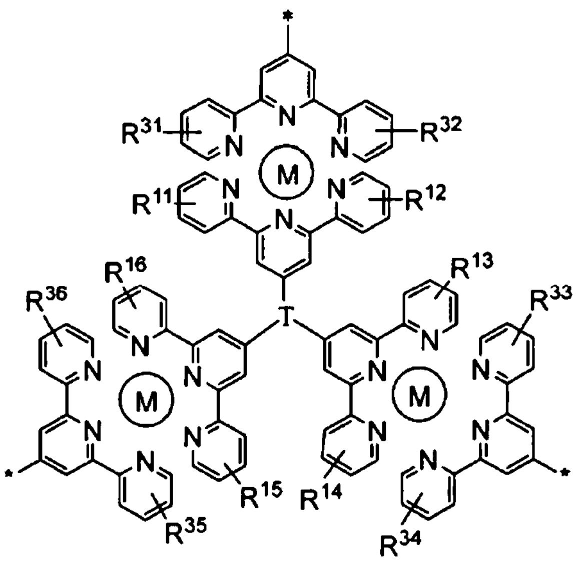

(I I)

(in der Formel II

sind $R^{11}$, $R^{12}$, $R^{13}$, $R^{14}$, $R^{15}$, $R^{16}$, $R^{31}$, $R^{32}$, $R^{33}$, $R^{34}$, $R^{35}$ und $R^{36}$ jeweils ein Atom oder eine funktionelle Gruppe, ausgewählt aus einer Gruppe bestehend aus einem Wasserstoffatom, einer Alkylgruppe, einer Alkoxygruppe und einer Arylgruppe, und können gleich oder unterschiedlich sein;

stellt M die Metallkationen dar;

stellt T die trivalente Gruppe dar und ist eines ausgewählt aus einer Gruppe bestehend aus einer trivalenten Arylgruppe, erhalten durch Entfernen von 3 Wasserstoffatomen von Benzol, einer trivalenten heterozyklischen Gruppe, erhalten durch Entfernen von 3 Wasserstoffatomen von einer 6-gliedrigen heterozyklischen Verbindung, einer Methingruppe und einem Stickstoffatom; und

stellt * Bindungsstellen dar).

**11.** Herstellungsverfahren des metallo-supramolekularen Polymers nach Anspruch 9 oder 10, wobei ein molares Mengenverhältnis eines Gesamtgehalts von Koordinationsstellen, die von den Bis(terpyridin)-Verbindungen und den Tris(terpyridin)-Verbindungen besessen werden, zu einem Gesamtgehalt der Metallkationen, die in der ersten Mischflüssigkeit und der zweiten Mischflüssigkeit enthalten sind, 1,0 bis 3,0 beträgt.

## Revendications

**1.** Polymère métallo-supramoléculaire formé par la liaison alternée de cations métalliques et de ligands organiques par des liaisons coordonnées, dans lequel

les ligands organiques comprennent :

un composé tris(terpyridine) représenté par une formule (B) suivante ; et
un composé bis(terpyridine) représenté par une formule (L) suivante :

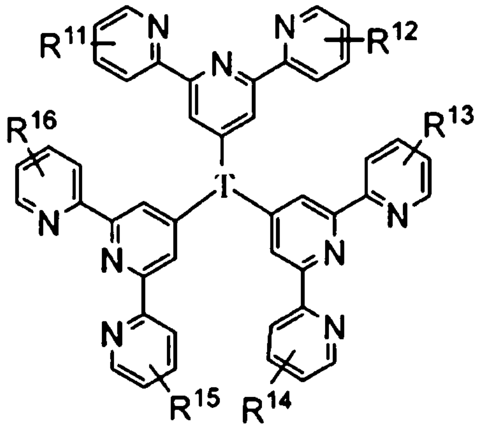

(B)

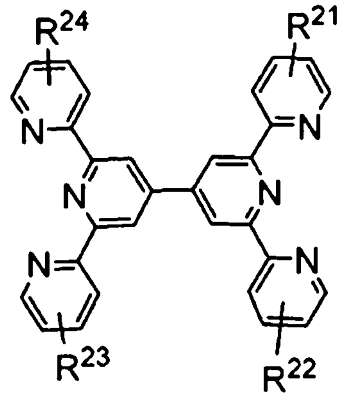

(L)

(dans la formule (B),

$R^{11}$, $R^{12}$, $R^{13}$, $R^{14}$, $R^{15}$, et $R^{16}$ sont chacun un atome ou un groupe fonctionnel choisi dans un groupe constitué d'un atome d'hydrogène, d'un groupe alkyle, d'un groupe alcoxyle, et d'un groupe aryle et peuvent être identiques ou différents ;
T est un groupe trivalent et est choisi dans un groupe constitué d'un groupe aryle trivalent obtenu par retrait de 3 atomes d'hydrogène du benzène, d'un groupe hétérocyclique trivalent obtenu par retrait de 3 atomes d'hydrogène d'un composé hétérocyclique à 6 chaînons, d'un groupe méthine, et d'un atome d'azote, et
dans la formule (L),
$R^{21}$, $R^{22}$, $R^{23}$, et $R^{21}$ sont chacun un atome ou un groupe fonctionnel choisi dans un groupe constitué d'un atome d'hydrogène, d'un groupe alkyle, d'un groupe alcoxyle, et d'un groupe aryle, et peuvent être identiques ou différents).

**2.** Polymère métallo-supramoléculaire selon la revendication 1, dans lequel

dans la formule (B), T est
un groupe choisi dans un groupe constitué d'un groupe aryle trivalent obtenu par retrait de 3 atomes d'hydrogène du benzène, d'un groupe hétérocyclique trivalent obtenu par retrait de 3 atomes d'hydrogène d'un composé hétérocyclique à 6 chaînons, et d'un groupe méthine.

**3.** Polymère métallo-supramoléculaire selon la revendication 1, dans lequel
dans la formule (B), T est un groupe représenté par une formule (I) suivante :

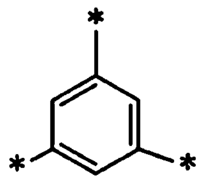

( I )

(dans la formule (I), * représente des sites de liaison).

**4.** Polymère métallo-supramoléculaire selon l'une quelconque des revendications 1 à 3, dans lequel le composé tris(terpyridine) représenté par la formule (B) est un composé représenté par une formule (B-1) suivante :

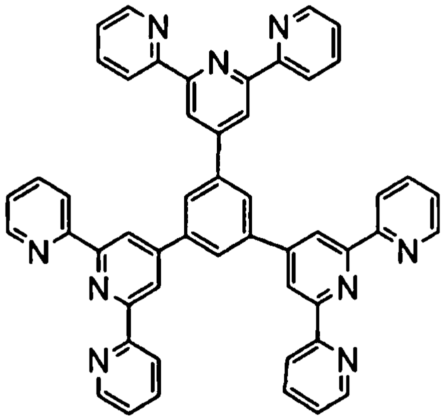

(B−1)

**5.** Polymère métallo-supramoléculaire selon l'une quelconque des revendications 1 à 4, comprenant un point de ramification trifonctionnel représenté par une formule (II) suivante :

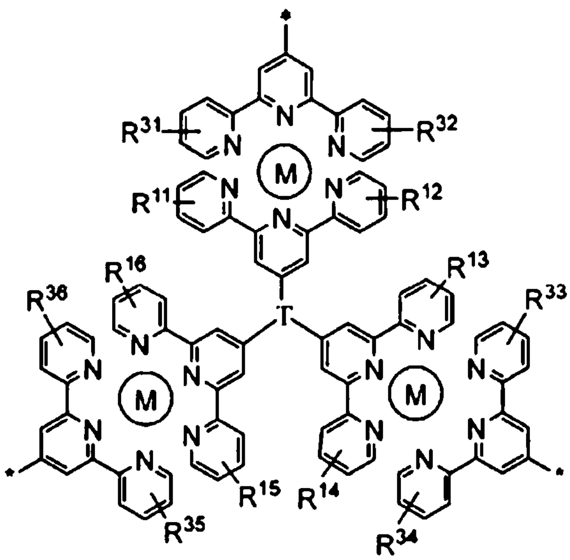

( I I )

(dans la formule (II),

$R^{11}$, $R^{12}$, $R^{13}$, $R^{14}$, $R^{15}$, $R^{16}$, $R^{31}$, $R^{32}$, $R^{33}$, $R^{34}$, $R^{35}$, et $R^{36}$ sont chacun un atome ou un groupe fonctionnel choisi dans un groupe constitué d'un atome d'hydrogène, d'un groupe alkyle, d'un groupe alcoxyle, et d'un groupe aryle et peuvent être identiques ou différents ;

M représente les cations métalliques ;

T représente le groupe trivalent et est un groupe choisi dans un groupe constitué d'un groupe aryle trivalent obtenu par retrait de 3 atomes d'hydrogène du benzène, d'un groupe hétérocyclique trivalent obtenu par retrait de 3 atomes d'hydrogène d'un composé hétérocyclique à 6 chaînons, d'un groupe méthine, et d'un atome d'azote ;

et
* représente des sites de liaison).

6. Polymère métallo-supramoléculaire selon l'une quelconque des revendications 1 à 5, dans lequel le composé bis(terpyridine) représenté par la formule (L) inclut un composé représenté par une formule (L-1) suivante :

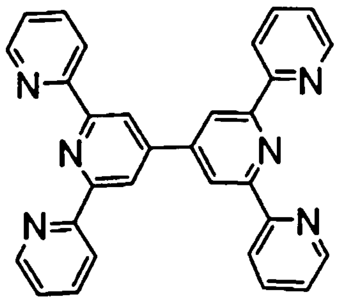

(L-1)

7. Polymère métallo-supramoléculaire selon l'une quelconque des revendications 1 à 6, dans lequel les cations métalliques sont des cations d'au moins un métal choisi dans un groupe constitué de fer (Fe), de cobalt (Co), de ruthénium (Ru) et d'osmium (Os).

8. Dispositif électrochrome comprenant le polymère métallo-supramoléculaire selon l'une quelconque des revendications 1 à 7.

9. Procédé de fabrication du polymère métallo-supra moléculaire formé par la liaison alternée de cations métalliques et de ligands organiques par des liaisons coordonnées, le procédé de fabrication du polymère métallo-supramoléculaire comprenant :

l'application d'énergie à un premier mélange liquide contenant un sel métallique constitué de cations métalliques et de contre-ions, et des composés bis(terpyridine) représentés par une formule (L) ci-dessous afin d'obtenir un précurseur de polymère métallo-supramoléculaire linéaire formé par la liaison alternée des composés bis(terpyridine) et des cations métalliques par des liaisons coordonnées ; et
l'application d'énergie à un deuxième mélange liquide contenant le sel métallique, le précurseur de polymère métallo-supra moléculaire, et un composé tris(terpyridine) représenté par une formule (B) ci-dessous afin d'obtenir un polymère métallo-supramoléculaire ayant une structure ramifiée dérivée du composé tris(terpyridine),

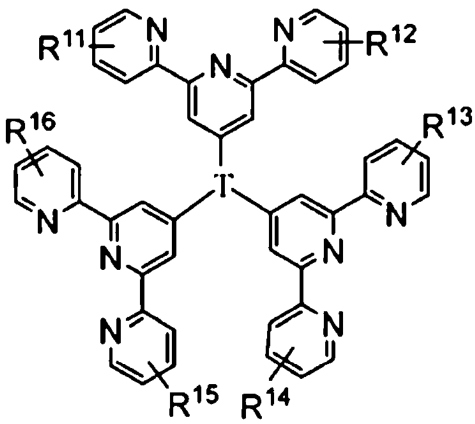

(B)

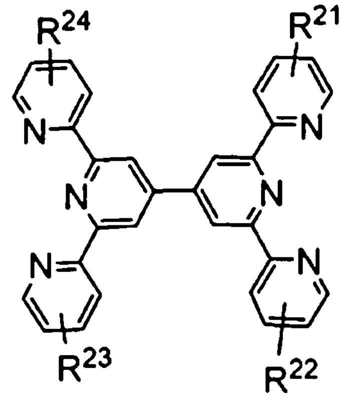

(L)

(dans la formule (B),

$R^{11}$, $R^{12}$, $R^{13}$, $R^{14}$, $R^{15}$, et $R^{16}$ sont chacun un atome ou un groupe fonctionnel choisi dans un groupe constitué d'un atome d'hydrogène, d'un groupe alkyle, d'un groupe alcoxyle, et d'un groupe aryle et peuvent être identiques ou différents ;

T est un groupe trivalent et est choisi dans un groupe constitué d'un groupe aryle trivalent obtenu par retrait de 3 atomes d'hydrogène du benzène, d'un groupe hétérocyclique trivalent obtenu par retrait de 3 atomes d'hydrogène d'un composé hétérocyclique à 6 chaînons, d'un groupe méthine, et d'un atome d'azote, et

dans la formule (L),

$R^{21}$, $R^{22}$, $R^{23}$, et $R^{24}$ sont chacun un atome ou un groupe fonctionnel choisi dans un groupe constitué d'un atome d'hydrogène, d'un groupe alkyle, d'un groupe alcoxyle, et d'un groupe aryle et peuvent être identiques ou différents).

**10.** Procédé de fabrication du polymère métallo-supramoléculaire selon la revendication 9, dans lequel la structure ramifiée inclut un point de ramification trifonctionnel représenté par une formule (II) suivante :

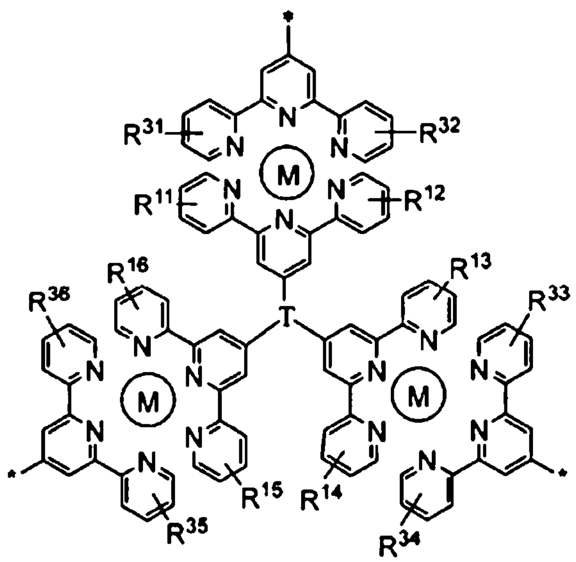

(II)

(dans la formule (II),

$R^{11}$, $R^{12}$, $R^{13}$, $R^{14}$, $R^{13}$, $R^{16}$, $R^{31}$, $R^{32}$, $R^{33}$, $R^{34}$, $R^{35}$, et $R^{36}$ sont chacun un atome ou un groupe fonctionnel choisi dans un groupe constitué d'un atome d'hydrogène, d'un groupe alkyle, d'un groupe alcoxyle, et d'un groupe aryle et sont identiques ou différents ;

M représente les cations métalliques ;

T représente le groupe trivalent et est un groupe choisi dans un groupe constitué d'un groupe aryle trivalent obtenu par retrait de 3 atomes d'hydrogène du benzène, d'un groupe hétérocyclique trivalent obtenu par retrait de 3 atomes d'hydrogène d'un composé hétérocyclique à 6 chaînons, d'un groupe méthine, et d'un atome d'azote ; et

* représente des sites de liaison).

**11.** Procédé de fabrication du polymère métallo-supramoléculaire selon la revendication 9 ou 10, dans lequel un rapport de teneur molaire entre une teneur totale en sites de coordination possédés par les composés bis(terpyridine) et les composéstris(terpyridine) et une teneur totale en cations métalliques contenus dans le premier mélange liquide et le deuxième mélange liquide est de 1,0 à 3,0.

[FIG.1A]

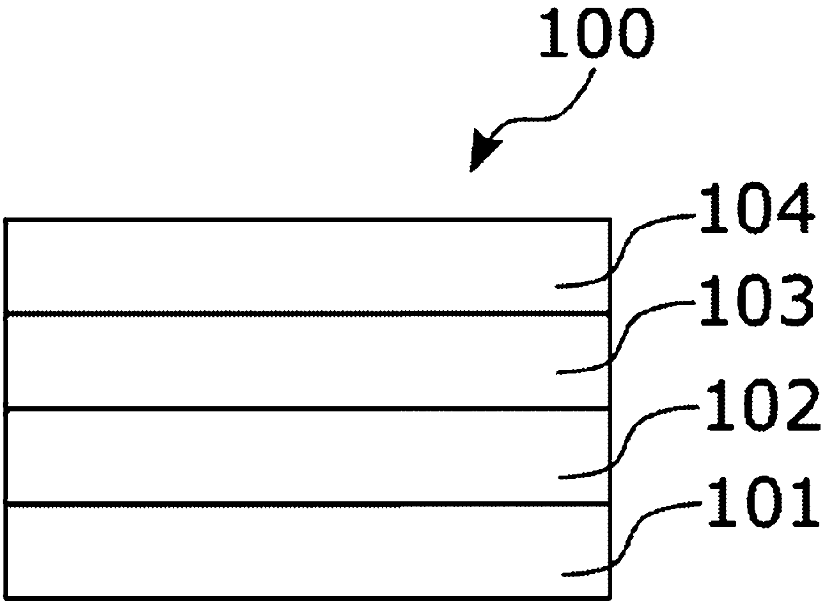


[FIG.1B]

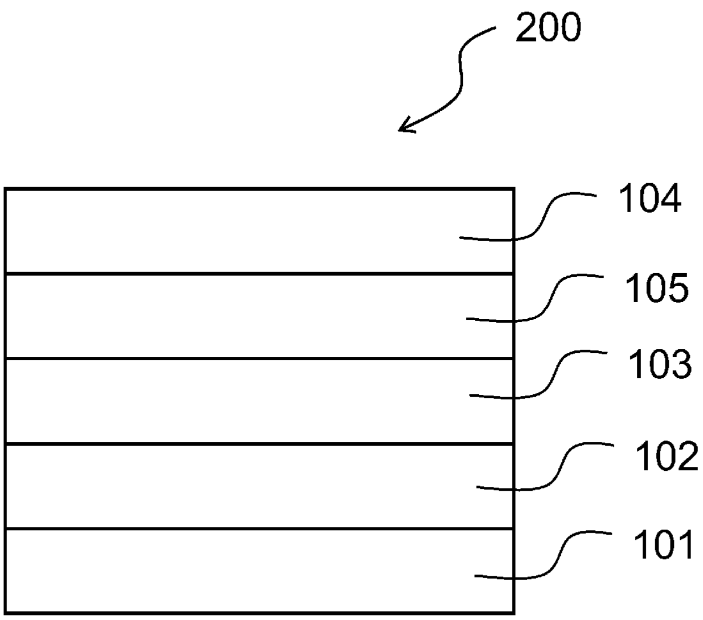

[FIG.2]

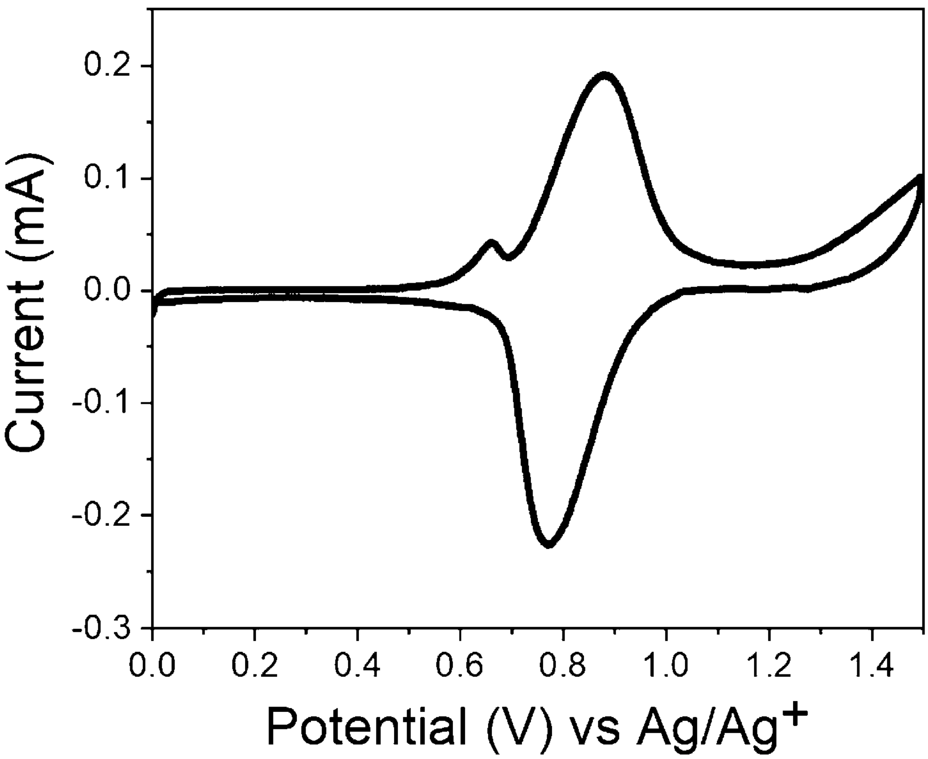
Current (mA)
0.2
0.1
0.0
-0.1
-0.2
-0.3
0.0
0.2
0.4
0.6
0.8
1.0
1.2
1.4
Potential (V) vs Ag/Ag+

[FIG.3]

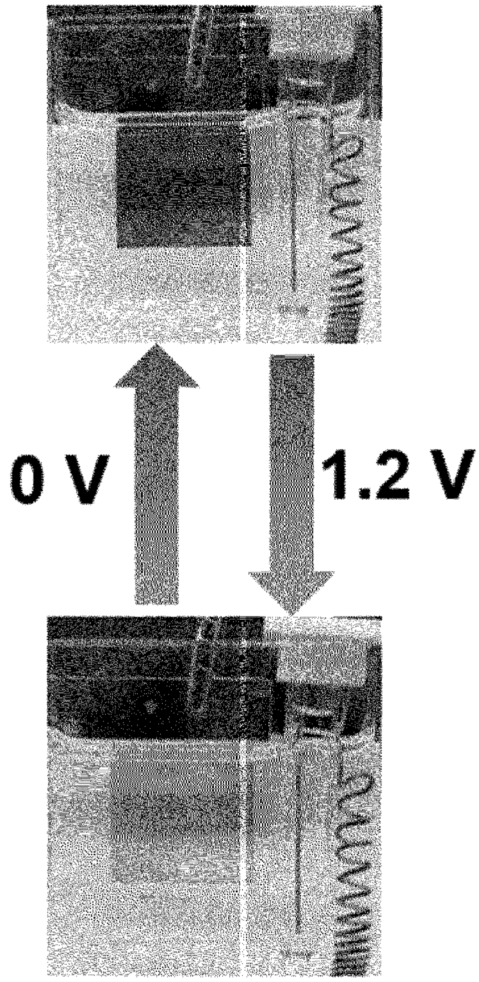

[FIG.4]

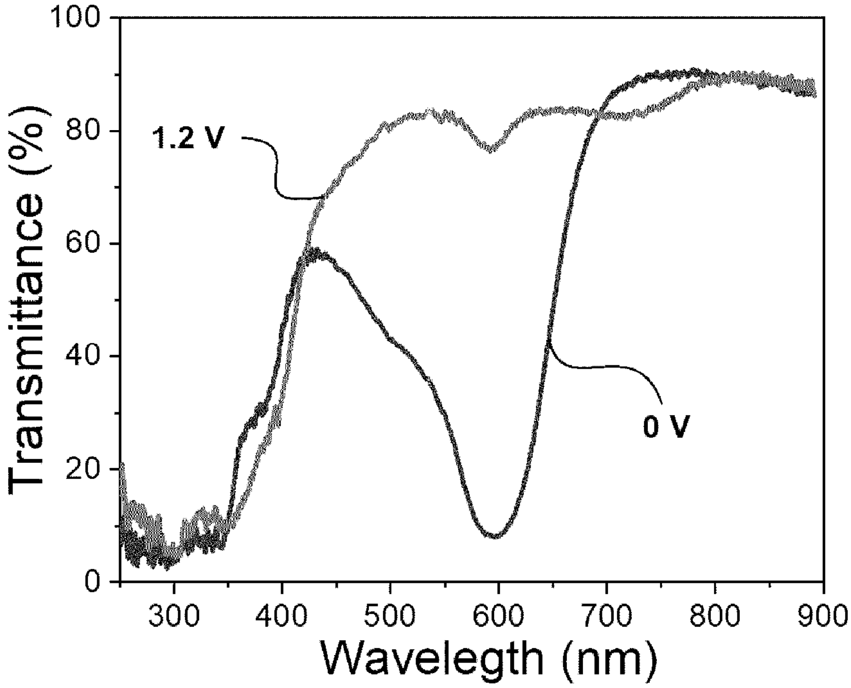
100
80
60
40
20
0
Transmittance (%)
1.2 V
0 V
300
400
500
600
700
800
900
Wavelegth (nm)

[FIG.5]

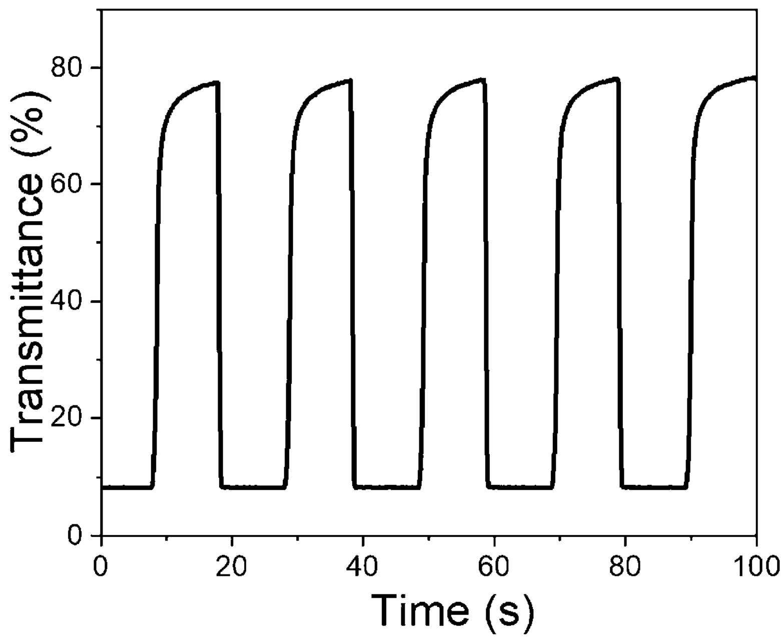
80
60
40
20
0
Transmittance (%)
0
20
40
60
80
100
Time (s)

[FIG.6]

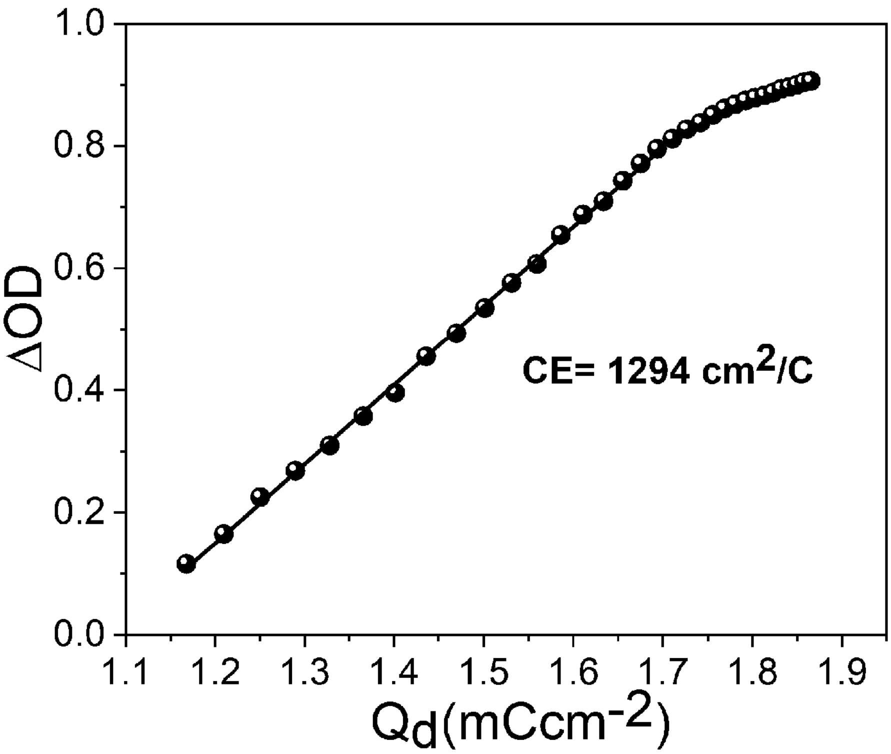
1.0
0.8
0.6
0.4
0.2
0.0
ΔOD
CE= 1294 cm2/C
1.1 1.2 1.3 1.4 1.5 1.6 1.7 1.8 1.9
Qd(mCcm-2)

[FIG.7]

(B-2)

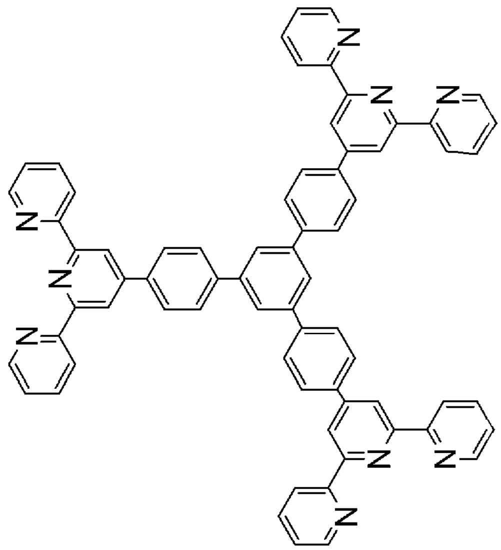

(L-2)

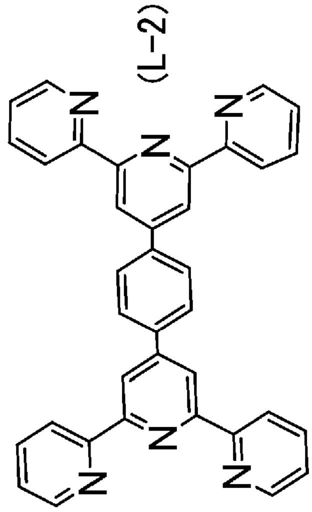

(B-1)

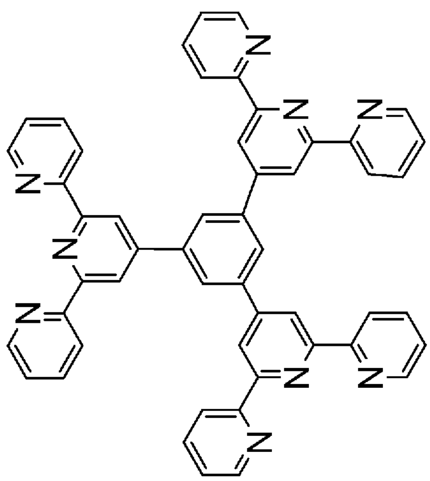

(L-1)

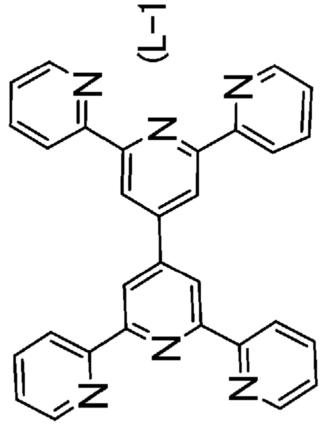

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007112957 A
- JP 2018145244 A
- WO 2019177160 A


### Non-patent literature cited in the description


- *ACS Appl. Mater. Interfaces*, 2014, vol. 6, 9118-9125
- *ACS Appl. Electron. Mater.*, 2021, vol. 3 (5), 2044-2055